# FASCICULE DE BREVET EUROPEEN

(11) **EP 3 182 671 B1**
(45) Date de publication et mention de la délivrance du brevet: **03.06.2020**
(21) Numéro de dépôt: 16203668.5
(22) Date de dépôt: 13.12.2016
(51) Int. Cl.: H04L 29/06, H04L 12/58, H04L 29/12, H04M 3/50, H04W 4/12, H04W 12/02, H04M 3/42, H04M 3/53, H04M 3/533

(54) **PROCÉDÉ ET DISPOSITIF POUR UN SERVICE DE MESSAGERIE**
VERFAHREN UND VORRICHTUNG FÜR EINEN MESSAGING-DIENST
METHOD AND APPARATUS FOR A MESSAGING SERVICE

(30) Priorité: 18.12.2015 FR 1562851
(43) Date de publication de la demande: 21.06.2017
(73) Titulaire: Orange, 75015 Paris (FR)
(72) Inventeur: CASEAU, François, 75015 Paris (FR)

(56) Documents cités:
- US-A1- 2012 106 728
- US-A1- 2013 183 949
- US-A1- 2015 181 025
- US-B1- 8 693 655

## Description

### Domaine de l'invention

La présente invention concerne les services de messagerie, dans lesquels il est proposé d'allouer une boîte de messagerie à un utilisateur d'un terminal de communication et de traiter les dépôts de messages reçus dans ladite boîte. Elle concerne plus particulièrement les services de messagerie mis en œuvre dans des services de communication garantissant l'anonymat de l'utilisateur.

### Arrière-plan de l'invention

Dans le domaine des télécommunications, les services de messagerie sont très répandus.

En particulier, la plupart des opérateurs de télécommunication offrent à leurs abonnés un service de messagerie vocale. Lorsqu'un abonné disposant de ce service n'est pas joignable, par exemple si son terminal est éteint ou hors couverture réseau, si sa ligne est occupée ou renvoyée de manière inconditionnelle sur la messagerie vocale ou tout simplement si l'utilisateur refuse de prendre l'appel, l'appelant qui souhait joindre l'abonné a alors la possibilité d'enregistrer un message vocal dans une boîte de messagerie vocale proposée par l'opérateur de télécommunications auquel a souscrit l'abonné. Ensuite, ce service de messagerie notifie à l'abonné l'existence d'un nouveau message dans sa boîte de messagerie vocale.

Certains opérateurs de télécommunications proposent également à leurs abonnés un service de messagerie multimédia. Un tel service permet notamment de recevoir des messages de grande taille contenant des images, du son, du texte ou de la vidéo. Ce type de service est mis en œuvre par un serveur de messagerie multimédia qui permet l'émission et la réception de messages multimédias à partir de n'importe quel terminal de communication comportant une interface de communication adaptée pour communiquer avec le service de messagerie multimédia et une interface de composition et de lecture de messages multimédia. Un tel service peut être déployé sur tout type de réseau de communication, tel que par exemple Internet, mobile ou fixe, administré par l'opérateur de télécommunications auquel a souscrit l'abonné.

Un inconvénient des services de messagerie précités est qu'ils sont très fortement intégrés à l'infrastructure des opérateurs de télécommunications qui les proposent. A cet effet, les serveurs de messagerie vocale ou multimédia ont des interfaces spécifiques qui communiquent avec des équipements de l'architecture du réseau de télécommunications administré par l'opérateur de télécommunications, tels que par exemple la base de données HLR (abréviation anglaise de « Home Location Register ») qui stocke les informations d'identification de l'abonné, la base de données VLR (abréviation anglaise de « Visitor Location Register ») qui mémorise de façon temporaire les données concernant tous les abonnés qui appartiennent à la surface géographique qu'elle contrôle, ou bien encore le centre d'authentification AuC (abréviation anglaise de « Authentification Center ») chargé de vérifier si un service, proposé par un opérateur de télécommunications, est demandé par un abonné autorisé.

Par conséquent, dans le cas où l'abonné dispose d'identifiants de contact autres qu'un identifiant de contact attribué par l'opérateur de télécommunications de l'abonné, tel que par exemple un numéro de téléphone mobile ou fixe, l'opérateur de télécommunications est dans l'impossibilité d'allouer une boîte de messagerie associée à ces autres identifiants de contact qu'il ne gère pas lui-même. De tels autres identifiants de contact sont par exemple une adresse SIP (de l'anglais « Session Initiation Protocol »), un identifiant Web-RTC (« Réseau Téléphonique Commuté »), un identifiant de messagerie instantanée, etc...

Il en résulte que l'abonné est généralement contraint de divulguer à toute personne qui souhaite le contacter l'identifiant de contact que lui a attribué son opérateur de télécommunications, de façon à pouvoir bénéficier d'un service de messagerie.

Ainsi, il ressort un manque de souplesse d'utilisation des services de messagerie existants.

En outre, de tels services de messagerie ne sont pas du tout adaptés dans le cadre de l'implémentation de certains services, notamment les services de communication garantissant l'anonymat d'un utilisateur qui souhaite émettre ou recevoir une communication à partir de son terminal de communication, et qui, à cet effet, proposent d'allouer un identifiant de contact secondaire au terminal de l'utilisateur disposant déjà d'un identifiant de contact principal. Par exemple, dans le cas où l'utilisateur dispose d'un terminal ce communication mobile, l'identifiant de contact principal est un identifiant MSISDN (en anglais « Mobile Station International Subscriber Directory Number ») correspondant de manière unique à la carte SIM (en anglais « Subscriber Identity Module ») qui est fournie par l'opérateur du réseau mobile auprès duquel s'est inscrit l'utilisateur. Plus généralement, un identifiant de contact principal est attribué par l'opérateur de télécommunications auprès duquel s'est abonné l'utilisateur. De tels services de garantie de l'anonymat sont par exemple proposés lorsque l'utilisateur souhaite passer une annonce sur un site Internet dédié à cet effet, tel que par exemple un site de petites annonces, un site de rencontres, un réseau social de type personnel ou professionnel, etc.... Il est alors proposé à l'utilisateur de bénéficier d'un identifiant de contact secondaire qui n'est pas lié à l'opérateur de télécommunications auquel l'utilisateur a souscrit et qui permet à ce dernier d'utiliser cet identifiant de contact secondaire pour communiquer avec toute personne ayant laissé ses coordonnées sur le site Internet dédié, sans avoir à dévoiler à cette personne son identifiant de contact principal.

L'utilisateur du service de garantie d'anonymat est également joignable sur cet identifiant de contact secondaire. Toutefois, dans le cas où l'utilisateur ne répond pas à une communication déclenchée sur son identifiant de contact secondaire, soit parce que son terminal est éteint ou hors couverture réseau, soit parce qu'il ne souhaite pas répondre à la communication, soit encore parce qu'il est en ligne, l'appelant n'a pas la possibilité de laisser un message sur une boîte de messagerie associée à cet identifiant de contact secondaire. Au mieux, le service de garantie d'anonymat peut proposer un renvoi conditionnel de l'appel sur une boîte de messagerie associée à l'identifiant de contact principal de l'utilisateur du service de garantie d'anonymat. Dans ce dernier cas de figure, le message d'accueil de la boîte de messagerie est susceptible de divulguer le nom ou l'identifiant de contact principal de l'utilisateur du service de garantie d'anonymat, ce qui fait perdre tout son intérêt à ce service.

Les documents US 8,693,655 et US 2015/0181025 mentionnent un procédé d'allocation à un utilisateur d'une boîte de messagerie qui est associée à un identifiant de contact secondaire ayant été attribué préalablement à l'utilisateur.

### Objet et résumé de l'invention

L'invention est définie dans les revendications indépendantes. Un des buts de l'invention est de remédier à des inconvénients de l'état de la technique précité.

A cet effet, un objet de la présente invention concerne un procédé d'allocation, à un utilisateur, d'une boîte de messagerie située dans un réseau de communication.

Un tel procédé est remarquable en ce qu'il met en œuvre, au niveau d'un dispositif de gestion de boîtes de messagerie, ce qui suit :
- réception en provenance d'un terminal de communication, via le réseau de communication, d'une requête de demande de boîte de messagerie, la requête comprenant une information d'identification de l'utilisateur, l'information d'identification étant différente d'un identifiant de contact de l'utilisateur, joignable sur un réseau de communication d'un opérateur de télécommunications auprès duquel est abonné l'utilisateur,
- enregistrement de l'information d'identification reçue en association avec un identifiant de boîte de messagerie,
- envoi d'un message de réponse à la requête, via le réseau de communication, au terminal de communication, le message comprenant l'identifiant de boîte de messagerie.

Une telle disposition permet d'allouer très simplement et rapidement une boîte de messagerie à un utilisateur donné, en associant de façon unique un identifiant de boîte de messagerie à une information d'identification de l'utilisateur qui est indépendante de tout abonnement de l'utilisateur à un opérateur de télécommunications donné et qui, de ce fait, est différente d'un identifiant de contact joignable sur un réseau de communication administré par un opérateur de télécommunications auquel a souscrit l'utilisateur.

Selon un mode de réalisation particulier, l'utilisateur étant un fournisseur de service, l'information d'identification de l'utilisateur contenue dans la requête est un identifiant du fournisseur de service.

Une telle disposition permet à un fournisseur de service, par exemple un service de soutien à une cause nationale ou internationale, telle que par exemple la lutte contre la faim dans le monde, la lutte contre cancer, le parrainage d'une association caritative, etc.., de se faire attribuer une boîte de messagerie à la volée, sans divulguer aux utilisateurs désireux de soutenir la cause, un quelconque identifiant de contact personnel lié à un abonnement du fournisseur de service à un opérateur de télécommunications.

Selon un autre mode de réalisation particulier, l'utilisateur, qui est d'une part un usager d'un fournisseur de service détenteur du terminal de communication et, d'autre part, qui a un identifiant de contact principal et un identifiant de contact secondaire qui ont été préalablement enregistrés en correspondance dans le terminal de communication, l'identifiant de contact principal étant joignable sur un réseau de communication d'un opérateur de télécommunications auprès duquel est abonné l'utilisateur et l'identifiant de contact secondaire étant différent de tout identifiant de contact joignable sur un réseau de communication d'un opérateur de télécommunications auprès duquel est abonné l'utilisateur, l'information d'identification de l'utilisateur contenue dans la requête est un identifiant du fournisseur de service et un identifiant de l'utilisateur.

Une telle disposition permet avantageusement d'associer une boîte de messagerie dédiée à un utilisateur donné, dans le cadre de l'utilisation, par ce dernier, d'un service auquel il s'est préalablement abonné.

Ainsi, par exemple, dans le cadre d'un service de garantie d'anonymat auquel a souscrit l'utilisateur qui a reçu à cet effet un identifiant de contact secondaire comme décrit plus haut, l'utilisateur a la possibilité de bénéficier d'une boîte de messagerie qui est entièrement dédiée à cet identifiant de contact secondaire et qui est apte à recevoir les messages de toute personne cherchant à contacter l'utilisateur sur cet identifiant de contact secondaire, en garantissant la non divulgation d'informations personnelles de l'utilisateur, telles que son nom ou son identifiant de contact principal.

Selon encore un mode de réalisation particulier, le procédé d'allocation précité comprend :
- la réception en provenance du terminal de communication, via le réseau de communication, d'une requête en configuration d'un profil de la boîte de messagerie associée à l'identifiant de boîte de messagerie, la requête comprenant l'identifiant de la boîte de messagerie,
- l'envoi en retour au terminal de communication, via le réseau de communication, d'une réponse contenant un formulaire de configuration de profil de boîte de messagerie à compléter par l'utilisateur,
- la réception en retour, en provenance du terminal de communication, via le réseau de communication, d'une réponse contenant le formulaire de configuration de profil de boîte de messagerie complété, le formulaire contenant un identifiant de contact principal de l'utilisateur,
- le paramétrage de la boîte de messagerie à l'aide d'informations contenues dans le formulaire et de l'identifiant de contact principal de l'utilisateur.

Une telle disposition permet de configurer très facilement le profil de l'utilisateur titulaire de la boîte de messagerie par un simple échange de messages, de type http par exemple, entre le terminal de communication et le dispositif de gestion de boîtes de messagerie, en indiquant l'identifiant de la boîte de messagerie et un identifiant de contact principal de l'utilisateur destiné à recevoir les notifications de dépôt de messages dans la boîte de messagerie.

Un telle disposition est ainsi beaucoup plus souple d'utilisation que dans l'art antérieur, où l'utilisateur est contraint de composer un identifiant de communication associé à la boîte de messagerie liée à son abonnement auprès d'un opérateur de télécommunications, puis de configurer sa boîte de messagerie à partir des touches de son terminal de communication ou en activant une commande vocale sur son terminal de communication.

Les différents modes ou caractéristiques de réalisation précités peuvent être ajoutés indépendamment ou en combinaison les uns avec les autres, au procédé d'allocation de boîte de messagerie tel que défini ci-dessus.

L'invention concerne également un procédé de traitement de dépôt de message par un utilisateur, dit *utilisateur déposant*, sur une boîte de messagerie qui a été préalablement allouée à un utilisateur, dit *utilisateur titulaire,* conformément au procédé d'allocation selon l'invention.

Un tel procédé de traitement est remarquable en ce que l'utilisateur titulaire ayant préalablement fourni à l'utilisateur déposant un identifiant de contact secondaire préalablement enregistré, dans un dispositif de gestion de boîtes de messagerie, en association avec un identifiant de boîte de messagerie allouée à l'utilisateur titulaire, l'identifiant de contact secondaire étant différent de tout identifiant de contact joignable sur un réseau de communication d'un opérateur de télécommunications auprès duquel est abonné l'utilisateur titulaire, il met en œuvre, au niveau du dispositif de gestion de boîtes de messagerie, ce qui suit :
- interception d'une communication déclenchée par un terminal de communication de l'utilisateur déposant, dit *terminal déposant,* à destination de l'identifiant de contact secondaire,
- routage de la communication à destination de la boîte de messagerie, en utilisant l'identifiant de la boîte de messagerie correspondant à l'identifiant de contact secondaire de l'utilisateur titulaire,
- réception du dépôt de message par le terminal déposant dans la boîte de messagerie correspondant à l'identifiant de boîte de messagerie allouée à l'utilisateur titulaire,
- envoi d'une notification de dépôt du message sur un identifiant de contact principal de l'utilisateur titulaire qui a été préalablement enregistré dans le dispositif de gestion de boîtes de messagerie, en association avec l'identifiant de contact secondaire et l'identifiant de boîte de messagerie allouée à l'utilisateur titulaire, l'identifiant de contact principal étant joignable sur un réseau de communication d'un opérateur de télécommunications auprès duquel est abonné l'utilisateur titulaire.

Une telle disposition permet, dans le cadre d'un service de garantie d'anonymat proposé à l'utilisateur, d'autoriser le dépôt de messages sur une boîte de messagerie associée à l'identifiant de contact secondaire appartenant à l'utilisateur du service de garantie d'anonymat, et d'envoyer sur le terminal de communication de ce dernier, associé à la fois à l'identifiant de contact principal et à l'identifiant de contact secondaire de cet utilisateur, tout message déposé sur ladite boîte de messagerie.

En outre, l'utilisateur d'un tel service a la possibilité de consulter, à partir de son terminal de communication associé à un identifiant de contact principal et à un identifiant de contact secondaire, les messages déposés sur la boîte de messagerie dont l'identifiant correspond à l'identifiant de contact secondaire.

L'invention concerne également un dispositif de gestion de boîtes de messagerie, comprenant un circuit de traitement qui est agencé pour allouer, à un utilisateur, une boîte de messagerie située dans un réseau de communication.

Un tel dispositif est remarquable en ce que le circuit de traitement est agencé en outre pour :
- recevoir, en provenance d'un terminal de communication, via le réseau de communication, une requête de demande de boîte de messagerie, la requête comprenant une information d'identification de l'utilisateur, l'information d'identification étant différente d'un identifiant de contact de l'utilisateur, joignable sur un réseau de communication d'un opérateur de télécommunications auprès duquel est abonné l'utilisateur,
- enregistrer l'information d'identification reçue en association avec un identifiant de boîte de messagerie,
- envoyer un message de réponse à la requête, via le réseau de communication, au terminal de communication, le message comprenant l'identifiant de boîte de messagerie.

Selon un mode de réalisation particulier, le circuit de traitement est en outre agencé pour traiter le dépôt d'un message par un utilisateur, dit *utilisateur déposant*, sur une boîte de messagerie qui a été préalablement allouée à un utilisateur, dit *utilisateur titulaire,* l'utilisateur titulaire ayant préalablement fourni à l'utilisateur déposant un identifiant de contact secondaire préalablement enregistré, dans un dispositif de gestion de boîtes de messagerie, en association avec un identifiant de boîte de messagerie allouée à l'utilisateur titulaire, l'identifiant de contact secondaire étant différent de tout identifiant de contact joignable sur un réseau de communication d'un opérateur de télécommunications auprès duquel est abonné l'utilisateur titulaire, le circuit de traitement étant en outre agencé pour :
- intercepter une communication déclenchée par un terminal de communication de l'utilisateur déposant, dit *terminal déposant,* à destination de l'identifiant de contact secondaire,
- router la communication à destination de la boîte de messagerie, en utilisant l'identifiant de la boîte de messagerie correspondant à l'identifiant de contact secondaire de l'utilisateur titulaire,
- recevoir le dépôt de message par le terminal déposant dans la boîte de messagerie correspondant à l'identifiant de boîte de messagerie allouée à l'utilisateur titulaire,
- envoyer une notification de dépôt du message sur un identifiant de contact principal de l'utilisateur titulaire qui a été préalablement enregistré dans le dispositif de gestion de boîtes de messagerie, en association avec l'identifiant de contact secondaire et l'identifiant de boîte de messagerie allouée à l'utilisateur titulaire, l'identifiant de contact principal étant joignable sur un réseau de communication d'un opérateur de télécommunications auprès duquel est abonné l'utilisateur titulaire.

L'invention concerne également un programme d'ordinateur pour mettre en œuvre des instructions de code de programme pour l'exécution des étapes du procédé d'allocation de boîte de messagerie ou du procédé de traitement de dépôt de message selon l'invention, lorsque le programme est exécuté sur un dispositif de gestion de boîtes de messagerie.

Un tel programme peut utiliser n'importe quel langage de programmation et être sous la forme de code source, code objet, ou de code intermédiaire entre code source et code objet, tel que dans une forme partiellement compilée, ou dans n'importe quelle autre forme souhaitable.

L'invention concerne également un support d'enregistrement lisible par un ordinateur sur lequel est enregistré un programme d'ordinateur, ce programme comportant des instructions adaptées à la mise en œuvre des étapes du procédé d'allocation de boîte de messagerie ou du procédé de traitement de dépôt de message selon l'invention, lorsque le programme est exécuté sur un dispositif de gestion de boîtes de messagerie tel que mentionné ci-dessus.

Les supports d'enregistrement peuvent être n'importe quelle entité ou dispositif capable de stocker le programme. Par exemple, le support peut comporter un moyen de stockage, tel qu'une ROM, par exemple un CD ROM ou une ROM de circuit microélectronique, une clé USB ou encore un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution des étapes du procédé d'allocation de boîte de messagerie ou du procédé de traitement de dépôt de message selon l'invention.

### Brève description des dessins

D'autres caractéristiques et avantages apparaîtront à la lecture de modes de réalisation préférés décrits en référence aux figures dans lesquelles:
- la figure 1A est une vue schématique et générale d'un système de messagerie selon l'invention, conformément à un premier mode de réalisation,
- la figure 2A représente les principales étapes d'un procédé d'allocation de boîte de messagerie dans le système de la figure 1A,
- la figure 3A représente les principales étapes d'un procédé de traitement de dépôt de message dans le système de la figure 1A,

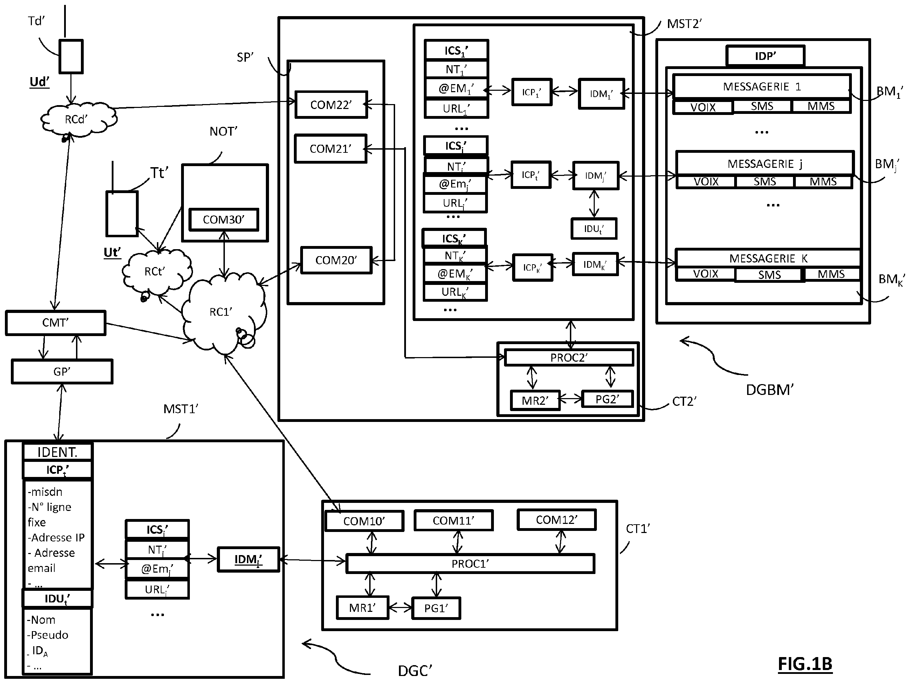

- la figure 1B est une vue schématique et générale d'un système de messagerie selon l'invention, conformément à un deuxième mode de réalisation,

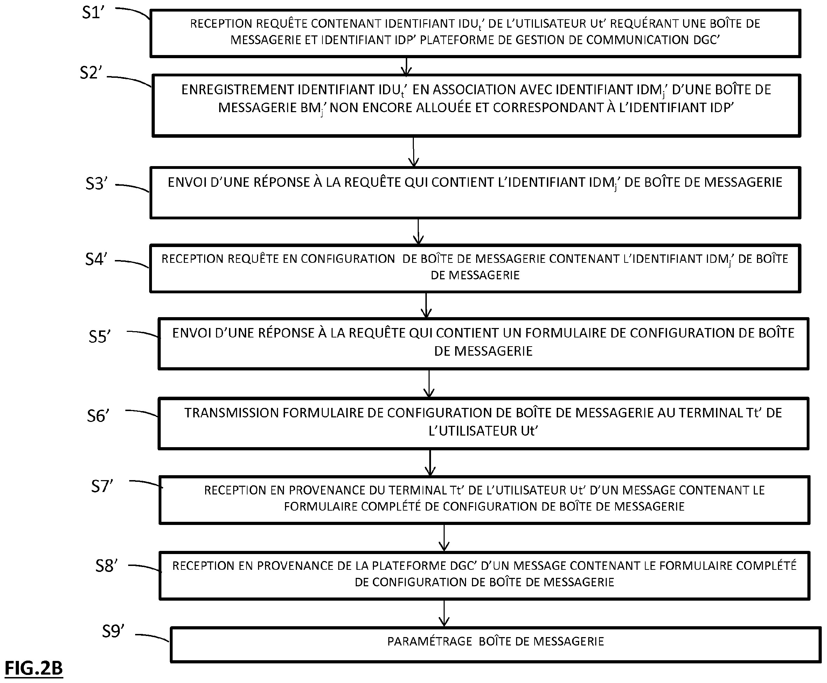

- la figure 2B représente les principales étapes d'un procédé d'allocation de boîte de messagerie dans le système de la figure 1B,

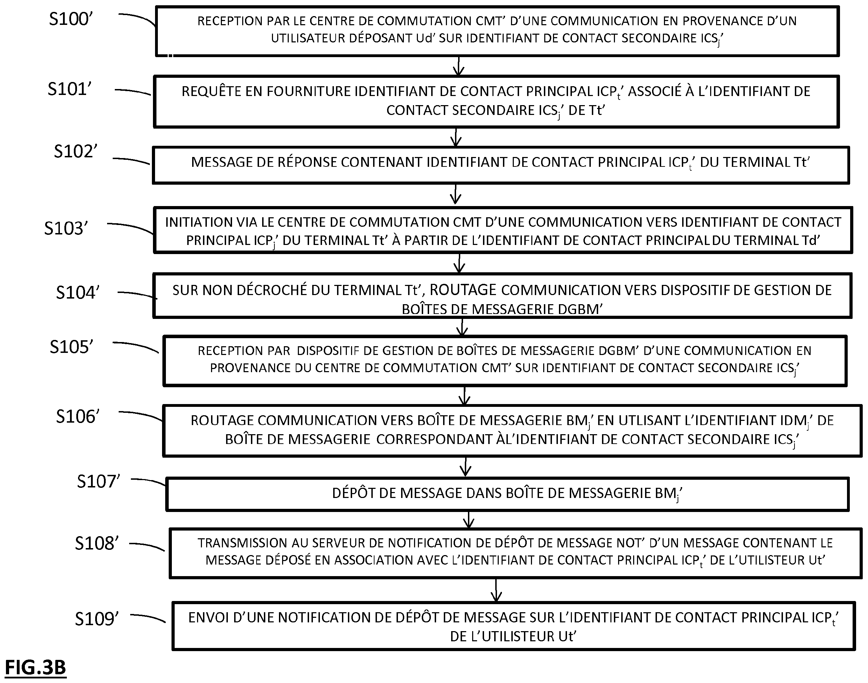

- la figure 3B représente les principales étapes d'un procédé de traitement de dépôt de message dans le système de la figure 1B.

### Description détaillée d'un premier mode de réalisation

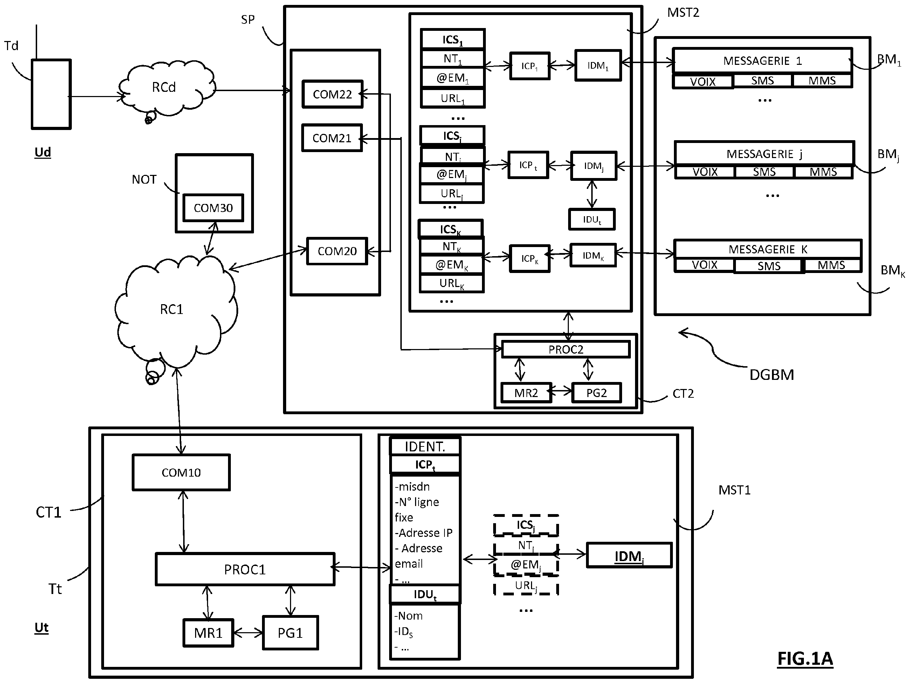

La figure 1A montre schématiquement un système de messagerie dans lequel est mis en œuvre le procédé d'allocation de boîtes de messagerie et de traitement de dépôt de message selon un premier mode de réalisation. Dans un souci de clarté de la figure 1A, certains éléments bien connus de ce système ne sont pas représentés. De tels éléments sont par exemple des serveurs, des nœuds, des stations de base, des passerelles ou encore d'autres entités du réseau de télécommunications utilisé dans ce système.

Le système comprend un terminal de communication Tt, dit terminal titulaire, apte à établir une communication avec un dispositif de gestion de boîtes de messagerie DGBM, via un réseau de communication RC1.

Dans l'exemple représenté, le réseau RC1 est un réseau étendu WAN (de l'anglais « Wide Area network »), par exemple un réseau Internet.

Le terminal titulaire Tt est par exemple un serveur de communication appartenant à un utilisateur titulaire Ut, tel qu'un fournisseur de service proposant par exemple de soutenir une cause nationale ou internationale, telle que par exemple la lutte contre la faim dans le monde, la lutte contre le cancer, le parrainage d'une association caritative, etc.... A cet effet, le serveur de communication Tt est adapté à recevoir des messages de soutien en provenance d'utilisateurs appelants, de tels messages pouvant être de type vocaux, textuels ou multimédias selon le type de terminaux appartenant à ces utilisateurs. Afin de ne pas monopoliser un trop grand nombre de personnes chargées de répondre à ces messages de façon synchrone et/ou de ne pas divulguer ses identifiants de contact personnels (ex : numéro de téléphone), le fournisseur de service alloue au serveur de communication Tt une boîte de messagerie comme cela va être décrit ci-dessous.

De façon connue en soi, le serveur Tt comprend des ressources physiques et/ou logicielles, en particulier un circuit de traitement CT1 pour mettre en œuvre des communications avec le dispositif de gestion de boîtes de messagerie, le circuit de traitement CT1 contenant un processeur PROC1 piloté par un programme d'ordinateur PG1.

A l'initialisation, les instructions de code du programme d'ordinateur PG1 sont par exemple chargées dans une mémoire RAM, notée MR1, avant d'être exécutées par le circuit de traitement CT1.

Le serveur de communication Tt comprend principalement :
- une interface de communication COM10 qui est adaptée pour échanger des messages selon par exemple le protocole http (abréviation anglaise de « HyperText Transfer Protocol ») avec le dispositif de gestion de boîtes de messagerie DGBM, via le réseau de communication RC1,
- un module de stockage MST1, par exemple une base de données, contenant :
   - un ou plusieurs identifiants de contact principaux ICPₜ, tels que par exemple le numéro de téléphone mobile, le numéro de ligne fixe, l'adresse IP ou bien l'adresse email permanente du fournisseur de service, lesdits identifiants lui ayant été attribués par un ou plusieurs opérateurs de télécommunications au(x)quel(s) le fournisseur de service Ut est abonné,
   - des informations IDUₜ d'identification du fournisseur de service, telle que par exemple son nom ou un identifiant de service ID_{S}.

L'interface de communication COM10 et le module de stockage MST1 sont pilotés par le processeur PROC1 du circuit de traitement CT1.

Conformément à l'invention, un identifiant de boîte de messagerie IDMⱼ est préalablement enregistré en correspondance avec le ou les identifiants de contact principaux ICPₜ et les informations d'identification IDUₜ du fournisseur de service Ut, dans la mémoire MST1 du serveur Tt.

L'identifiant de boîte de messagerie IDMⱼ est, de façon optionnelle, enregistré également en correspondance avec un identifiant de contact secondaire ICSⱼ du fournisseur de service, dans la mémoire MST1 du serveur Tt. A cet effet, l'identifiant de contact secondaire ICSⱼ est représenté en pointillé sur la figure 1A.

L'identifiant de contact secondaire ICSⱼ est destiné à recevoir les communications des utilisateurs appelants pour soutenir la cause. Il s'agit par exemple d'un numéro téléphonique de type fixe ou mobile NTⱼ et/ou d'une adresse email @EMⱼ et/ou d'une adresse URLⱼ d'accès à un contenu de type Web, telle que par exemple un lien url (de l'anglais « Uniform Resource Locator »), etc.... L'identifiant de contact secondaire n'est en aucun cas un identifiant de contact où le fournisseur de service Ut peut être joignable via un réseau de communication d'un opérateur de télécommunications auprès duquel le fournisseur de service est abonné. Comme cela va être décrit plus loin dans la description, l'identifiant de contact secondaire ICSⱼ est préalablement attribué par le dispositif de gestion de boîtes de messagerie DGBM au fournisseur de service Ut, en association avec un identifiant de boîte de messagerie IDMⱼ.

L'identifiant de contact secondaire ICSⱼ a de préférence une durée de validité qui correspond par exemple à la durée de souscription au service de messagerie conforme à l'invention qui elle-même, dans l'exemple représenté, correspond à la durée du soutien à la cause. En variante, l'identifiant de contact secondaire ICSⱼ a une durée prédéterminée, fixée au préalable par l'administrateur du dispositif de gestion de boîtes de messagerie DGBM.

Le dispositif de gestion de boîtes de messagerie DGBM est une plateforme installée dans le réseau de communication RC1 qui est destinée, selon l'invention, à :
- allouer, sur requête du terminal titulaire Tt, via le réseau de communication RC1, une boîte de messagerie associée à un identifiant unique de boîte de messagerie IDMⱼ,
- traiter toute demande de dépôt de messages envoyés sur la boîte de messagerie correspondant à l'identifiant de boîte de messagerie IDMⱼ.

De façon connue en soi, le dispositif de gestion de boîtes de messagerie DGBM comprend des ressources physiques et/ou logicielles, en particulier un circuit de traitement CT2 pour allouer au fournisseur de service Tt une boîte de messagerie située dans le réseau de communication RC1 et pour traiter le dépôt d'un message par un utilisateur, sur la boîte de messagerie correspondant à l'identifiant de boîte de messagerie IDMⱼ, le circuit de traitement CT2 contenant un processeur PROC2 piloté par un programme d'ordinateur PG2.

A l'initialisation, les instructions de code du programme d'ordinateur PG2 sont par exemple chargées dans une mémoire RAM, notée MR2, avant d'être exécutées par le circuit de traitement CT2.

Le dispositif de gestion de boîtes de messagerie DGBM comprend principalement :
- une première interface de communication COM20 qui fonctionne par exemple selon le protocole de communication http et qui est adaptée pour :
   - échanger, via le réseau de communication RC1, des messages avec l'interface de communication COM10 du serveur de communication Tt du fournisseur de service Ut,
   - envoyer des messages sur une interface de communication COM30 d'un serveur de notification de dépôt de messages, portant la référence NOT sur la figure 1A,
   - recevoir des messages multimédia en provenance d'un terminal de communication, dit terminal déposant Td, appartenant à un utilisateur déposant Ud, via le réseau de communication RCd auquel l'utilisateur déposant Ud est abonné,
- une deuxième interface de communication COM21 apte à recevoir des messages de type vocaux en provenance du terminal déposant Td, via le réseau de communication de RCd,
- une troisième interface de communication COM22 apte à recevoir des messages textuels de type SMS (de l'anglais « Short Message Service ») en provenance du terminal déposant Td, via le réseau de communication de RCd,
- une pluralité de boîtes de messagerie BM₁, BM₂,..., BMⱼ, ..., BM_{K} (1≤j≤K) aptes à stocker des messages de type vocaux, SMS, multimédia.

Conformément à l'invention, le dispositif de gestion de boîtes de messagerie DGBM comprend un serveur SP, par exemple de type proxy, qui comprend un module de stockage MST2, par exemple une base de données, contenant une pluralité d'identifiants de boîtes de messagerie IDM₁, IDM₂,..., IDMⱼ,..., IDM_{K} associés respectivement aux boîtes de messagerie BM₁, BM₂,..., BMⱼ, ..., BM_{K}.

Chacun des identifiants IDM₁, IDM₂,..., IDMⱼ,..., IDM_{K} de boîtes de messagerie est en outre associé respectivement :
- à un identifiant de contact principal correspondant ICP₁, ICP₂,..., ICPₜ,..., ICP_{K} d'un utilisateur titulaire correspondant,
- à un identifiant de contact secondaire correspondant ICS₁, ICS₂,..., ICSⱼ,..., ICS_{K} d'un utilisateur titulaire Ut correspondant.

Dans le système de messagerie de la figure 1A, le serveur de notification de dépôt de message NOT est en outre adapté pour envoyer un message de notification de dépôt de message au serveur Tt, via le réseau de communication RC1.

Il convient de noter que même si dans le mode de réalisation représenté sur la figure 1A, le serveur de notification de dépôt de messages NOT n'est pas hébergé dans le dispositif de gestion de boîtes de messagerie DGBM, tout en étant connecté fonctionnellement à ce dernier, cet exemple n'est en rien limitatif.

En effet, dans une variante de réalisation, le dispositif de gestion de boîtes de messagerie DGBM pourrait tout à fait héberger le serveur de notification de dépôt de messages NOT.

Les interfaces de communication COM20, COM21, COM22, le module de stockage MST2, et les boîtes de messagerie BM₁, BM₂,..., BMⱼ, ..., BM_{K} sont pilotés par le processeur PROC2 du circuit de traitement CT2.

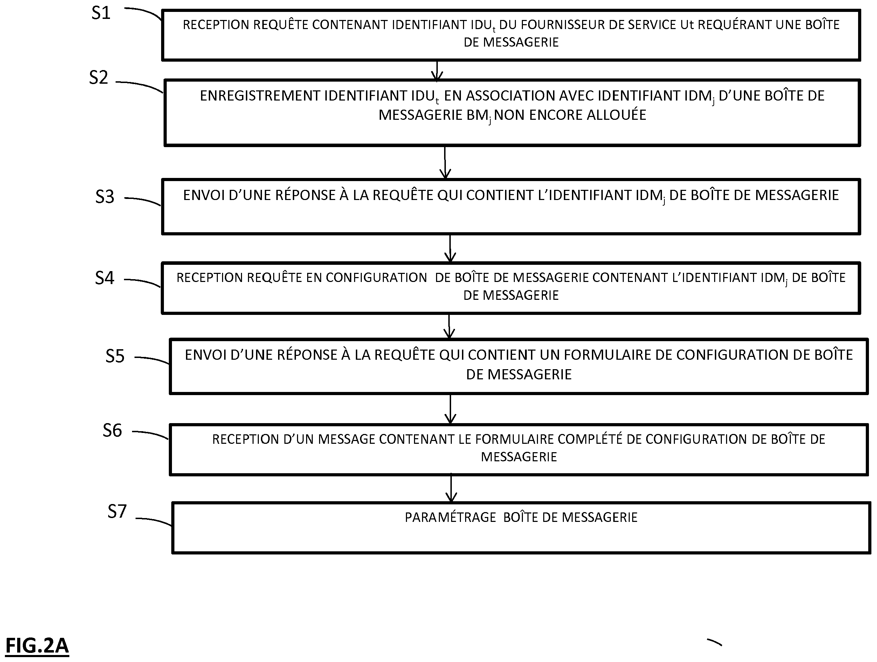

En référence maintenant aux figures 1A et 2A, on décrit maintenant le déroulement d'un procédé d'allocation d'une boîte de messagerie selon l'invention, tel que mis en œuvre dans le dispositif de gestion de boîtes de messagerie DGBM.

Le procédé d'allocation de boîtes de messagerie se déroule comme suit :
En S1, le dispositif de gestion de boîtes de messagerie DGBM reçoit sur son interface de communication COM20, en provenance du serveur Tt, via le réseau de communication RC1, une requête de demande de boîte de messagerie qui contient un identifiant IDUₜ du fournisseur de service Ut, tel que préalablement mémorisé dans la mémoire de stockage MST1 du fournisseur de service Ut de la figure 1A.

Dans l'exemple représenté, la requête est de type http et est envoyée depuis l'interface de communication COM10 du serveur Tt du fournisseur de service Ut. Une telle requête est envoyée, soit par l'intermédiaire d'une application logicielle dédiée qui a été préalablement téléchargée dans le serveur Tt, soit par l'intermédiaire d'un serveur Web intermédiaire situé dans le réseau de communication RC1.

En S2, le dispositif de gestion de boîtes de messagerie DGBM enregistre, dans la mémoire de stockage MST2, l'identifiant IDUₜ reçu, en association avec un identifiant de boîte messagerie IDMⱼ sélectionné parmi une pluralité d'identifiants de boîtes de messagerie IDM₁, IDM₂,..., IDMⱼ,..., IDM_{K} stockés dans la mémoire MST2 du dispositif de gestion de boîtes de messagerie DGBM et correspondant respectivement à des boîtes de messagerie BM₁, BM₂,..., BMⱼ, ..., BM_{K} non encore allouées.

En S3, le dispositif de gestion de boîtes de messagerie DGBM envoie en réponse au serveur Tt du fournisseur de service, au moyen de l'interface de communication COM20, via le réseau de communication RC1, une réponse à la requête reçue en S1, ladite réponse contenant l'identifiant IDMⱼ de boîte de messagerie sélectionné.

A l'issue de cette opération, une boîte de messagerie BMⱼ est allouée au fournisseur de service Ut.

En S4, le dispositif de gestion de boîtes de messagerie DGBM reçoit sur son interface de communication COM20, en provenance du serveur Tt, via le réseau de communication RC1, une requête en configuration de la boîte de messagerie BMⱼ, ladite requête en configuration contenant l'identifiant IDMⱼ de la boîte de messagerie BMⱼ.

Dans l'exemple représenté, la requête est de type http et est envoyée depuis l'interface de communication COM10 du serveur Tt du fournisseur de service Ut. Une telle requête est envoyée, soit par l'intermédiaire d'une application logicielle dédiée préalablement téléchargée dans le serveur Tt, soit par l'intermédiaire d'un serveur Web intermédiaire situé dans le réseau de communication RC1.

En S5, le dispositif de gestion de boîtes de messagerie DGBM envoie en réponse au serveur Tt du fournisseur de service, au moyen de l'interface de communication COM20, via le réseau de communication RC1, une réponse à la requête reçue en S4, ladite réponse contenant un formulaire de configuration de profil de boîte de messagerie à compléter par le fournisseur de service Ut.

En S6, le dispositif de gestion de boîtes de messagerie DGBM reçoit sur son interface de communication COM20, en provenance du serveur Tt, via le réseau de communication RC1, un message contenant le formulaire complété de configuration de profil de boîte de messagerie.

Selon un exemple de réalisation, le formulaire de configuration se présente sous la forme d'une ou plusieurs pages Web, dans lequel l'utilisateur Ut saisit ou coche en particulier les informations suivantes :
- type de formats des messages à recevoir : vocaux, SMS, MMS, mp3, mp4, JPEG, etc...
- identifiant de contact principal ICPₜ souhaité pour recevoir les notifications de dépôt des messages enregistrés dans la boîte de messagerie BMⱼ,
- type de notifications de dépôts de messages souhaité : textuelle (SMS, push, email, url, etc..) ou vocale (tonalité particulière au décroché).

En fonction des informations ci-dessus, l'utilisateur Ut sélectionne au moins un identifiant de contact secondaire ICSⱼ proposé dans le formulaire et du type décrit plus haut dans la description.

L'utilisateur Ut a également la possibilité, en cliquant sur un lien url contenu dans le formulaire, d'accéder à un serveur (non représenté sur la figure 1A) afin d'enregistrer un message d'accueil vocal ou textuel de la boîte de messagerie BMⱼ.

En S7, le dispositif de gestion de boîtes de messagerie DGBM paramètre la boîte de messagerie BMⱼ conformément aux informations contenues dans le formulaire reçu et associe l'identifiant de contact principal ICPₜ, dans la mémoire de stockage MST2, en association avec l'identifiant IDMⱼ de boîte de messagerie.

A l'issue de cette opération de paramétrage, la boîte de messagerie BMⱼ est prête à enregistrer tout message déposé par un utilisateur déposant Ud.

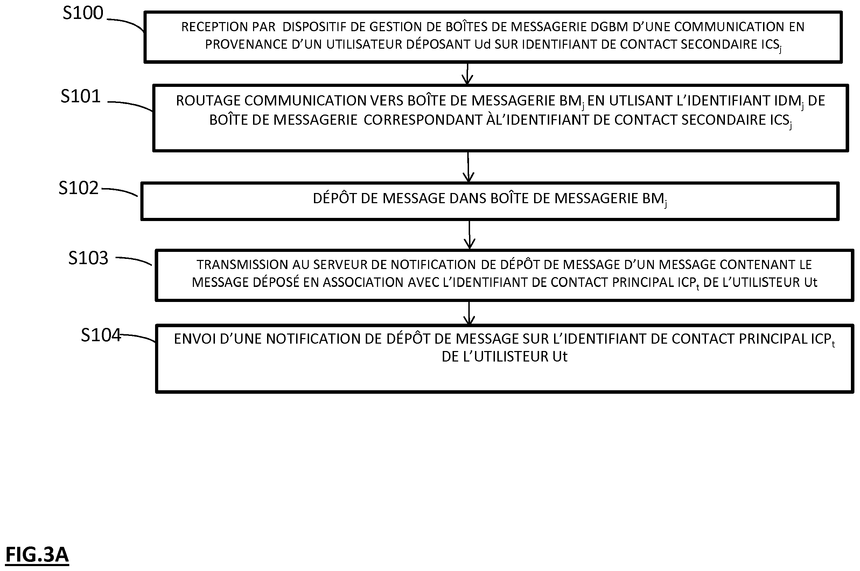

En référence maintenant aux figures 1A et 3A, on décrit maintenant le déroulement d'un procédé de traitement de dépôt de message selon l'invention, tel que mis en œuvre dans le dispositif de gestion de boîtes de messagerie DGBM.

Dans une étape préalable, le fournisseur de service Ut a communiqué à l'utilisateur déposant Ud l'identifiant de contact secondaire ICSⱼ que lui a attribué le dispositif de gestion de boîtes de messagerie DGBM, de façon à ce que l'utilisateur déposant Ud puisse joindre cet identifiant de contact pour y déposer son message. En fonction des capacités de communication du terminal de communication Td de l'utilisateur déposant Ud, le fournisseur de service Ut communique à l'utilisateur déposant Ud le numéro téléphonique NTⱼ et/ou l'adresse email @EMⱼ et/ou l'url URLⱼ. Selon un exemple de réalisation, ce ou ces identifiant(s) de contact secondaire(s) ICSⱼ sont par exemple communiqués à l'utilisateur déposant Ud sur une page Web de soutien à la cause du fournisseur de service Ut disponible sur son site Internet.

En S100, le dispositif de gestion de boîtes de messagerie DGBM reçoit une communication sur l'une de ses interfaces de communication COM20, COM21 ou COM22, en provenance du terminal Td d'un utilisateur déposant Ud, via le réseau de communication RCd auquel le terminal Td est rattaché.

Si, par exemple, l'utilisateur déposant déclenche un appel vocal à partir de son terminal Td, sur le numéro téléphonique NTⱼ, la communication est reçue sur l'interface de communication COM21.

Si, par exemple, l'utilisateur déposant déclenche un appel SMS à partir de son terminal Td, sur le numéro téléphonique NTⱼ, la communication est reçue sur l'interface de communication COM22.

Si, par exemple, l'utilisateur déposant Ud envoie un email à partir de son terminal Td, à l'adresse @EMⱼ, cette communication est reçue sur l'interface de communication COM20.

Si, par exemple, l'utilisateur déposant Ud clique sur l'url URLⱼ contenue dans la page Web de soutien à la cause, cette communication est également reçue sur l'interface de communication COM20.

En S101, la communication reçue est routée à destination de la boîte de messagerie BMⱼ, en utilisant l'identifiant de la boîte de messagerie IDMⱼ enregistré dans le module de stockage MST2 en correspondance avec l'identifiant de contact secondaire ICSⱼ de l'utilisateur titulaire Ut.

En S102, suite au déclenchement du message d'accueil qui, selon le type du message à déposer, peut être visuel ou vocal, le dépôt de message par le terminal déposant Td est reçu dans la boîte de messagerie BMⱼ.

En fonction des capacités de communication du terminal déposant Td, le message peut par exemple contenir des données audio, textuelles, des images, de la vidéo, des données multimédia, etc...

De façon connue en soi, le message déposé est associé à des informations d'identification de l'utilisateur déposant Ud, telles que par exemple son nom, son numéro de téléphone, son adresse email, un pseudonyme, etc...

En S103, le dispositif de gestion de boîtes de messagerie DGBM transmet sur l'interface COM30 du serveur NOT de notification de dépôt de message, au moyen de son interface de communication 20, via le réseau de communication RC1, un message indiquant qu'un message a été déposé en S102 en association avec l'identifiant de contact principal ICPₜ du fournisseur de service Ut et le type de notification de message sélectionné préalablement par l'utilisateur Ut lors de la configuration de sa boîte de messagerie.

En S104, le serveur de notification de dépôt de message NOT envoie alors directement sur l'identifiant de contact principal ICPₜ du serveur Tt un message contenant la notification de dépôt dudit message.

En fonction du type de notification de dépôt de message sélectionné préalablement par l'utilisateur Ut lors de la configuration de sa boîte de messagerie, et à titre d'exemples non limitatifs :
- la notification est un SMS ou un appel vocal avec tonalité particulière au décroché qui est reçu sur un numéro de téléphonie fixe ou mobile constituant l'identifiant de contact principal ICPₜ du serveur Tt, ledit SMS ou ledit appel pouvant contenir directement le message déposé par l'utilisateur déposant Ud ou bien contenir un menu vocal pour consulter le message déposé par l'utilisateur déposant,
- la notification est un email reçu à l'adresse email constituant l'identifiant de contact principal ICPₜ du serveur Tt, ledit email pouvant contenir directement le message déposé par l'utilisateur déposant Ud ou bien contenir un lien url d'accès au message dans la boîte de messagerie BMⱼ,
- la notification est une notification de type push ou USSD (abréviation anglaise de « *Unstructured Supplementary Service Data* ») ou encore de type url, reçue su l'adresse IP constituant l'identifiant de contact principal ICPₜ du serveur Tt, la notification de type push ou USSD pouvant contenir directement le message déposé par l'utilisateur déposant Ud ou bien contenir un lien url d'accès au message dans la boîte de messagerie BMⱼ, et la notification de type url donnant accès directement au message dans la boîte de messagerie BMⱼ.

Conformément au procédé d'allocation de boîte de messagerie et au procédé de traitement de dépôt de message décrits ci-dessus, les communications entre le terminal de communication Tt, le dispositif de gestion de boîtes de messagerie et le serveur de notification NOT peuvent être sécurisées par des mécanismes d'authentification et de chiffrement bien connus.

La boîte de messagerie BMⱼ peut par ailleurs être supprimée après une durée prédéterminée enregistrée dans le dispositif de gestion de boîtes de messagerie DGBM ou sur requête de l'utilisateur Ut auprès du dispositif de gestion de boîtes de messagerie, ladite requête contenant l'identifiant IDMⱼ de boîte de messagerie.

### Description détaillée d'un deuxième mode de réalisation

On décrit maintenant en référence à la figure 1B, un deuxième mode de réalisation d'un système de messagerie dans lequel est mis en œuvre le procédé d'allocation de boîtes de messagerie et de traitement de dépôt de messages selon un deuxième mode de réalisation. Dans un souci de clarté de la figure 1B, certains éléments bien connus de ce système ne sont pas représentés. De tels éléments sont par exemple des serveurs, des nœuds, des stations de base, des passerelles ou encore d'autres entités du réseau de télécommunications utilisé dans ce système.

Le système comprend un terminal de communication Tt', dit terminal titulaire, apte à établir une communication avec un dispositif de gestion de boîtes de messagerie DGBM', via un réseau de communication RC1'.

Le système comprend un terminal de communication Tt', dit terminal titulaire, apte à établir une communication avec un dispositif de gestion de boîtes de messagerie DGBM', via un réseau de communication RC1'.

Dans l'exemple représenté, le réseau RC1' est un réseau étendu WAN (de l'anglais « Wide Area network »), par exemple un réseau Internet.

Egalement dans l'exemple représenté, le terminal Tt' est un téléphone mobile comprenant une carte SIM dotée d'un identifiant d'abonné unique appelé IMSI (abréviation anglaise de « International Mobile Subscriber Identity »). De façon connue en soi, cet identifiant est utilisé pour identifier le terminal Tt' dans son réseau de communication de rattachement RCt', c'est-à-dire le réseau auprès duquel l'utilisateur Ut' du terminal Tt' s'est abonné. Dans l'exemple représenté, le réseau RCt' est de type mobile tel qu'un réseau GSM (abréviation anglaise de « Global System for Mobile communications »), UMTS (abréviation anglaise de « Universal Mobile Télécommunications System »), LTE (abréviation anglaise de « Long Term Evolution »), etc.... L'identifiant IMSI est associé à un identifiant de contact principal MSISDN, noté ICPₜ', qui est le numéro de téléphone permettant de joindre le terminal Tt'.

Cet exemple n'est bien sûr pas limitatif. Ainsi, selon un autre exemple, le terminal Tt' est par exemple un téléphone fixe rattaché à un autocommutateur téléphonique privé PABX (de l'anglais « Private Automatic Branch eXchange »).

En fonction du type du réseau de communication RCt', l'identifiant de contact principal ICPₜ' du terminal Tt' pourrait être différent d'un numéro de téléphone. Par exemple, il pourrait correspondre à une adresse email, une adresse IP, identifiant Web-RTC (« Réseau Téléphonique Commuté »), un identifiant de messagerie instantanée, etc...

Le terminal Tt' est apte à établir une communication, via un serveur de gestion de communication DGC', avec un terminal de communication Td', disposant lui aussi d'un identifiant de contact principal. Un tel serveur DGC' contient une plateforme installée dans le réseau qui est destinée à :
- traiter toute communication initiée par le terminal Tt' à partir de son identifiant de contact principal ICPₜ', à destination du terminal Td',
- et, inversement, traiter toute communication initiée par le terminal de communication Td' à partir de son identifiant de contact principal, à destination du terminal Tt'.

Dans l'exemple représenté, le terminal Td' est un téléphone mobile rattaché à un réseau de communication RCd' de type mobile. Toutefois, le terminal Td' peut être également un téléphone fixe rattaché à un réseau de télécommunications commuté.

Selon un autre exemple non représenté, les réseaux de communication RCt' et RCd' peuvent former un réseau de communication unique d'un même opérateur de télécommunications.

En outre, dans la présente description, on entend par « communication » un appel vocal classique ou n'importe quelle autre session de communication de type données et/ou audio et/ou vidéo initiée par le terminal Tt' à destination du terminal Td' ou, inversement, par le terminal Td' à destination du terminal Tt'.

Selon le deuxième mode de réalisation, le terminal Tt' dispose en outre d'un identifiant de contact secondaire ICSⱼ' qui lui a été préalablement attribué par un fournisseur de service (non représenté), auprès duquel l'utilisateur Ut' s'est abonné, dans le cadre d'un service de garantie d'anonymat proposé par ce fournisseur de service et administré par la plateforme de gestion de communication DGC'. Comme expliqué plus haut dans la description, un tel service de garantie de l'anonymat est proposé lorsque l'utilisateur souhaite par exemple renseigner des informations sur un site Internet dédié à cet effet, tel que par exemple un site de petites annonces, un site de rencontres, un réseau social de type personnel ou professionnel, etc....

Dans le mode de réalisation représenté, l'identifiant de contact secondaire ICSⱼ' est choisi dans un pool d'identifiants d'appels secondaires géré par la plateforme de gestion de communication DGC'.

Dans l'exemple représenté, l'identifiant de contact secondaire ICSⱼ' correspond à un numéro de téléphone de type fixe ou mobile NTⱼ'. Toutefois, en variante et selon le type de communication susceptible d'être mis en œuvre par le terminal Tt', l'identifiant de contact secondaire ICSⱼ' est par exemple une adresse email @EMⱼ' et/ou une adresse URLⱼ' d'accès à un contenu de type Web, telle que par exemple un lien url (de l'anglais « Uniform Resource Locator »). L'identifiant de contact secondaire n'est en aucun cas un identifiant de contact où l'utilisateur Ut' peut être joignable via un réseau de communication d'un opérateur de télécommunications auprès duquel le fournisseur de service est abonné. L'identifiant de contact secondaire ICSⱼ' est destiné à recevoir les communications des utilisateurs appelant l'utilisateur Ut'. Comme cela va être décrit plus loin dans la description, l'identifiant de contact secondaire ICSⱼ' est préalablement attribué par le dispositif de gestion de boîtes de messagerie DGBM' de la plateforme de gestion de communication DGC', en association avec un identifiant de boîte de messagerie IDMⱼ'.

L'identifiant de contact secondaire ICSⱼ' a de préférence une durée de validité qui correspond par exemple à la durée de souscription au service de messagerie conforme à l'invention qui elle-même, dans l'exemple représenté, correspond à la durée du service de garantie d'anonymat proposé par le fournisseur de service. En variante, l'identifiant de contact secondaire ICSⱼ' a une durée prédéterminée, fixée au préalable par l'administrateur du dispositif de gestion de boîtes de messagerie DGBM'.

L'identifiant de contact secondaire ICSⱼ' a par exemple été attribué dans le cadre du dépôt d'une annonce sur un site Internet dédié qui est administré par un fournisseur de service. Dans le cadre d'un site Internet dédié aux particuliers, il peut s'agir par exemple d'une annonce de vente d'un bien ou d'un service qu'a déposée l'utilisateur Ut'. Dans le cadre d'un réseau social, il peut s'agir par exemple d'une annonce décrivant le parcours personnel ou professionnel de l'utilisateur Ut'. Dans le cadre d'un service de communication dédié à une entreprise, il peut s'agir par exemple d'une annonce déposée par l'utilisateur Ut', salarié de l'entreprise, en vue d'être mise à disposition pour l'utilisateur Ud' également salarié de l'entreprise.

Selon un mode de réalisation, la plateforme DGC' de gestion de communication comprend des ressources physiques et/ou logicielles, en particulier un circuit de traitement CT1' pour mettre en œuvre la gestion de communication entre le terminal Tt' et le terminal Td', le circuit de traitement CT1' contenant un processeur PROC1' piloté par un programme d'ordinateur PG1'.

A l'initialisation, les instructions de code du programme d'ordinateur PG1' sont par exemple chargées dans une mémoire RAM, notée MR1', avant d'être exécutées par le circuit de traitement CT1'.

La plateforme DGC' de gestion de communication comprend principalement :
- une première interface de communication COM10' qui est adaptée pour échanger des messages selon par exemple le protocole http avec :
   - le dispositif de gestion de boîtes de messagerie DGBM', via le réseau de communication RC1',
   - avec le terminal Tt', via le réseau RCt' et/ou RC1' ou tout autre réseau adapté,
   - un fournisseur de service auprès duquel l'utilisateur UTt' s'est abonné,
- une deuxième interface de communication COM11' apte à communiquer avec les terminaux Tt' et Td' et qui, dans l'exemple représenté, est une interface de communication apte à émettre ou recevoir des appels vocaux,
- une troisième interface de communication COM12' apte à communiquer avec les terminaux Tt' et Td' et qui, dans l'exemple représenté, est une interface de communication apte à émettre ou recevoir des messages textuels de type SMS (de l'anglais « Short Message Service ») ou bien encore des messages multimédia de type MMS (de l'anglais « Multimedia Messaging Service »),
- un gestionnaire de profils GP' apte à gérer le profil de l'utilisateur Ut' du terminal Tt',
- un module de stockage MST1', par exemple une base de données, relié au gestionnaire de profils GP' et contenant :
   - un ou plusieurs identifiants de contact principaux ICPₜ', tels que par exemple le numéro de téléphone mobile, le numéro de ligne fixe, l'adresse IP ou bien l'adresse email permanente de l'utilisateur Ut', lesdits identifiants lui ayant été attribués par un ou plusieurs opérateurs de télécommunications au(x)quel(s) l'utilisateur Ut' est abonné,
   - des informations IDUₜ' d'identification de l'utilisateur Ut', telles que par exemple son nom, son pseudo, un identifiant ID_{A} de l'annonce que l'utilisateur Ut' a déposée auprès du fournisseur de service.

Les interfaces de communication COM10', COM11', COM12', le module de stockage MST1', le gestionnaire de profil GP' sont pilotés par le processeur PROC1' du circuit de traitement CT1'.

Conformément à l'invention, un identifiant de boîte de messagerie IDMⱼ' est préalablement enregistré dans la mémoire MST1' de la plateforme de gestion de communication DGC', en correspondance avec :
- le ou les identifiants de contact principaux ICPₜ',
- les informations d'identification IDUₜ' de l'utilisateur Ut',
- un identifiant de contact secondaire ICSⱼ' de l'utilisateur Ut'.

Le gestionnaire de profil GP' est connecté à un centre de commutation CMT' qui est apte à traiter le trajet de la communication initiée à partir du terminal Tt' vers le terminal Td', et inversement.

Le centre de commutation CMT' est bien connu en soi. Dans l'exemple représenté, il correspond par exemple à un centre de commutation mobile "MSC" (Mobile Switching Centre) d'un réseau de télécommunications mobile. Selon un autre mode de réalisation dans lequel le terminal Tt' serait de type fixe, le centre de commutation CMT' pourrait être un commutateur local d'un réseau de télécommunications fixe. On notera que dans le réseau de télécommunications fixe, le commutateur local traite les appels locaux entre des abonnés d'un même commutateur ainsi que le départ et l'arrivée du trafic avec les autres commutateurs.

Le centre de commutation CMT' est caractérisé par deux fonctions principales.

La première fonction principale est une fonction de contrôle d'appel qui correspond à la fonction centrale d'un commutateur téléphonique. Une telle fonction met en œuvre différentes opérations telles que le décodage d'informations d'adresse et le routage d'appels téléphoniques depuis un terminal appelant vers un terminal appelé. Une telle fonction est associée à certaines fonctionnalités d'appel telles que:
- une mise en attente de l'appel,
- un transfert d'appel sur une messagerie gérée par le dispositif de gestion de boîtes de messagerie DGBM', lorsque le terminal Tt' appelé n'est pas décroché,
- une sonnerie particulière indiquant à un utilisateur Ud' appelant que l'utilisateur Ut' est déjà en ligne ou non joignable.

Cette première fonction traite par ailleurs le niveau de signalisation établi au cours de la communication entre les deux terminaux, c'est-à-dire le niveau correspondant à la signalisation des messages échangés via les différentes entités du réseau de communication.

La deuxième fonction principale est une fonction « Média » pour traiter toute la partie Média de la communication entre les deux terminaux. Une telle fonction correspond au niveau « Média » de traitement des données textuelles et/ou audio et/ou des images/vidéos échangées entre les deux terminaux lors de la communication.

Il convient de noter que même si dans le mode de réalisation représenté sur la figure 1B, le gestionnaire de profils GP' et le centre de commutation CMT' sont hébergés ensemble sur la plateforme de gestion de communication DGC', cet exemple n'est en rien limitatif.

En effet, dans une variante de réalisation, la plateforme de gestion de communication DGC' pourrait contenir uniquement le gestionnaire de profils GP', le centre de commutation CMT' étant hébergé à un autre endroit dans le réseau mais toujours connecté fonctionnellement au gestionnaire de profils GP'.

Le dispositif de gestion de boîtes de messagerie DGBM' est une plateforme installée dans le réseau de communication RC1' qui est destinée, selon l'invention, à :
- allouer, sur requête de la plateforme de gestion de communication DGC', via le réseau de communication RC1', une boîte de messagerie associée à un identifiant unique de boîte de messagerie IDMⱼ',
- traiter toute demande de dépôt de messages envoyés sur la boîte de messagerie correspondant à l'identifiant de boîte de messagerie IDMⱼ'.

De façon connue en soi, le dispositif de gestion de boîtes de messagerie DGBM' comprend des ressources physiques et/ou logicielles, en particulier un circuit de traitement CT2' pour allouer à l'utilisateur Ut' une boîte de messagerie située dans le réseau de communication RC1' et pour traiter le dépôt d'un message par un utilisateur Ud', sur la boîte de messagerie correspondant à l'identifiant de boîte de messagerie IDMⱼ', le circuit de traitement CT2' contenant un processeur PROC2' piloté par un programme d'ordinateur PG2'.

A l'initialisation, les instructions de code du programme d'ordinateur PG2' sont par exemple chargées dans une mémoire RAM, notée MR2', avant d'être exécutées par le circuit de traitement CT2'.

Le dispositif de gestion de boîtes de messagerie DGBM' comprend principalement :
- une première interface de communication COM20' qui fonctionne par exemple selon le protocole de communication http et qui est adaptée pour :
   - échanger, via le réseau de communication RC1', des messages avec l'interface de communication COM10' de la plateforme de gestion de communication DGC',
   - envoyer des messages sur une interface de communication COM30' d'un serveur de notification de dépôt de messages, portant la référence NOT' sur la figure 1B,
   - recevoir des messages multimédia en provenance du terminal de communication Td', via le réseau de communication RCd' auquel l'utilisateur déposant Ud' est abonné,
- une deuxième interface de communication COM21' apte à recevoir des messages de type vocaux en provenance du terminal déposant Td', via le réseau de communication RCd',
- une troisième interface de communication COM22' apte à recevoir des messages textuels de type SMS (de l'anglais « Short Message Service ») en provenance du terminal déposant Td', via le réseau de communication RCd',
- une pluralité de boîtes de messagerie BM₁', BM₂',..., BMⱼ', ..., BM_{K}' (1≤j≤K) aptes à stocker des messages de type vocaux, SMS, multimédia.

Conformément à l'invention, le dispositif de gestion de boîtes de messagerie DGBM' comprend un serveur SP', par exemple de type proxy, qui comprend un module de stockage MST2', par exemple une base de données, contenant une pluralité d'identifiants de boîtes de messagerie IDM₁', IDM₂',..., IDMⱼ' IDM_{K}' associés respectivement aux boîtes de messagerie BM₁', BM₂',..., BMⱼ', ..., BM_{K}'.

Chacun des identifiants IDM₁', IDM₂',..., IDMⱼ',..., IDM_{K}' de boîtes de messagerie est en outre associé respectivement :
- à un identifiant de contact principal correspondant ICP₁', ICP₂',..., ICPₜ',..., ICP_{K}' d'un utilisateur titulaire correspondant,
- à un identifiant de contact secondaire correspondant ICS₁', ICS₂',..., ICSⱼ',.. ICS_{K}' d'un utilisateur titulaire correspondant.

Dans le système de messagerie de la figure 1B, le serveur de notification de dépôt de messages NOT' est en outre adapté pour envoyer un message de notification de dépôt de messages au terminal Tt' de l'utilisateur Ut', via le réseau de communication RCt'.

Il convient de noter que même si dans le mode de réalisation représenté sur la figure 1B, le serveur de notification de dépôt de messages NOT' n'est pas hébergé dans le dispositif de gestion de boîtes de messagerie DGBM', tout en étant connecté fonctionnellement à ce dernier, cet exemple n'est en rien limitatif.

En effet, dans une variante de réalisation, le dispositif de gestion de boîtes de messagerie DGBM' pourrait tout à fait héberger le serveur de notification de dépôt de messages NOT'.

Les interfaces de communication COM20', COM21', COM22', le module de stockage MST2', et les boîtes de messagerie BM₁', BM₂',..., BMⱼ', ..., BM_{K}' sont pilotés par le processeur PROC2' du circuit de traitement CT2'.

En référence maintenant aux figures 1B et 2B, on décrit maintenant le déroulement d'un procédé d'allocation d'une boîte de messagerie selon un deuxième mode de réalisation, tel que mis en œuvre dans le dispositif de gestion de boîtes de messagerie DGBM'.

Préalablement au déroulement de ce procédé, l'utilisateur Ut' s'est inscrit, dans le cadre notamment du dépôt d'une annonce sur un site Internet dédié, à un service de garantie d'anonymat administré par la plateforme de gestion de communication DGC' en liaison avec le fournisseur de service qui administre le site Internet dédié. Suite à cette inscription, l'utilisateur Ut' a communiqué à la plateforme DGC' son ou ses identifiants de contact principaux ICPₜ', ainsi que ses informations d'identification IDUₜ', lesquels ont été enregistrés dans la mémoire de stockage MST1' de la plateforme DGC', en correspondance avec un ou plusieurs identifiants de contact secondaires ICSⱼ' attribué(s) par la plateforme DGC' à l'utilisateur Ut'.

Selon l'invention, au cours de cette inscription, l'utilisateur Ut' a en outre sélectionné, en association avec le/les identifiants de contact secondaires ICSⱼ', une option « messagerie » proposée par la plateforme DGC'.

Le procédé d'allocation de boîtes de messagerie se déroule alors comme suit :
En S1', le dispositif de gestion de boîtes de messagerie DGBM' reçoit sur son interface de communication COM20', en provenance de la plateforme DGC', via le réseau de communication RC1', une requête de demande de boîte de messagerie qui contient un identifiant IDP' de la plateforme DGC', ainsi qu'un identifiant IDUₜ' de l'utilisateur Ut', tel que préalablement mémorisé dans la mémoire de stockage MST1' de la plateforme DGC'.

Dans l'exemple représenté, la requête est de type http et est envoyée depuis l'interface de communication COM10' de la plateforme DGC'. Une telle requête est envoyée, soit par l'intermédiaire d'une application logicielle dédiée qui a été préalablement téléchargée dans la plateforme DGC', soit par l'intermédiaire d'un serveur Web intermédiaire situé dans le réseau de communication RC1'.

En S2', le dispositif de gestion de boîtes de messagerie DGBM' enregistre, dans la mémoire de stockage MST2', l'identifiant IDUₜ' reçu, en association avec un identifiant de boîte messagerie IDMⱼ' sélectionné parmi une pluralité d'identifiants de boîtes de messagerie IDM₁', IDM₂',..., IDMⱼ',..., IDM_{K}' stockés dans la mémoire MST2' du dispositif de gestion de boîtes de messagerie DGBM' et correspondant respectivement à des boîtes de messagerie BM₁', BM₂',..., BMⱼ', ..., BM_{K}' non encore allouées et correspondant à l'identifiant IDP' de la plateforme de gestion de communication DGC' proposant le service de garantie d'anonymat.

En S3', le dispositif de gestion de boîtes de messagerie DGBM' envoie en réponse à la plateforme de gestion de communication DGC', au moyen de l'interface de communication COM20', via le réseau de communication RC1', une réponse à la requête reçue en S1', ladite réponse contenant l'identifiant IDMⱼ' de boîte de messagerie sélectionné.

A l'issue de cette opération, une boîte de messagerie BMⱼ' est allouée à l'utilisateur Ut' du terminal Tt', par l'intermédiaire de la plateforme de gestion de communication DGC'.

En S4', le dispositif de gestion de boîtes de messagerie DGBM' reçoit sur son interface de communication COM20', en provenance de la plateforme de gestion de communication DGC', via le réseau de communication RC1', une requête en configuration de la boîte de messagerie BMⱼ', ladite requête en configuration contenant l'identifiant IDMⱼ' de la boîte de messagerie BMⱼ'.

Dans l'exemple représenté, la requête est de type http et est envoyée depuis l'interface de communication COM10' de la plateforme DGC'. Une telle requête est envoyée, soit par l'intermédiaire d'une application logicielle dédiée préalablement téléchargée dans la plateforme DGC', soit par l'intermédiaire d'un serveur Web intermédiaire situé dans le réseau de communication RC1'.

En S5', le dispositif de gestion de boîtes de messagerie DGBM' envoie en réponse à la plateforme DGC', au moyen de l'interface de communication COM20', via le réseau de communication RC1', une réponse à la requête reçue en S4', ladite réponse contenant un formulaire de configuration de profil de boîte de messagerie à compléter par l'utilisateur Ut' du terminal Tt'.

En S6', la plateforme de gestion de communication DGC' retransmet au terminal Tt', au moyen de son interface de communication COM10', via les réseaux de communication RC1' et RCt', le formulaire de configuration de la boîte de messagerie BMⱼ'.

En S7', la plateforme de gestion de communication DGC' reçoit sur son interface de communication COM10', en provenance du terminal Tt', via les réseaux de communication RC1' et RCt', un message contenant le formulaire complété de configuration de profil de boîte de messagerie.

En S8', le dispositif de gestion de boîtes de messagerie DGBM' reçoit sur son interface de communication COM20', en provenance de la plateforme DGC', via le réseau de communication RC1', un message contenant le formulaire complété de configuration de profil de boîte de messagerie.

Selon un exemple de réalisation, le formulaire de configuration se présente sous la forme d'une ou plusieurs pages Web, dans lequel l'utilisateur Ut' saisit ou coche en particulier les informations suivantes :
- type de formats des messages à recevoir : vocaux, SMS, MMS, mp3, mp4, JPEG, etc...
- identifiant de contact principal ICPₜ' souhaité pour recevoir les notifications de dépôt des messages enregistrés dans la boîte de messagerie BMⱼ',
- type de notifications de dépôts de messages souhaité : textuelle (SMS, push, email, url, etc..) ou vocale (tonalité particulière au décroché).

En fonction des informations ci-dessus, l'utilisateur Ut' sélectionne au moins un identifiant de contact secondaire ICSⱼ' qui a été préalablement enregistré dans la plateforme DGC'.

L'utilisateur Ut' a également la possibilité, en cliquant sur un lien url contenu dans le formulaire, d'accéder à un serveur (non représenté sur la figure 1B) afin d'enregistrer un message d'accueil vocal ou textuel de la boîte de messagerie BMⱼ'.

En S9', le dispositif de gestion de boîtes de messagerie DGBM' paramètre la boîte de messagerie BMⱼ' conformément aux informations contenues dans le formulaire reçu et associe l'identifiant de contact principal ICPₜ', dans la mémoire de stockage MST2', en association avec l'identifiant IDMⱼ' de boîte de messagerie.

A l'issue de cette opération de paramétrage, la boîte de messagerie BMⱼ' est prête à enregistrer tout message déposé par un utilisateur déposant Ud'.

En référence maintenant aux figures 1B et 3B, on décrit maintenant le déroulement d'un procédé de traitement de dépôt de messages selon un deuxième mode de réalisation de l'invention, tel que mis en œuvre dans le dispositif de gestion de boîtes de messagerie DGBM'.

Dans une étape préalable, la plateforme de gestion de communication DGC' a communiqué à l'utilisateur titulaire Ut' un identifiant de contact secondaire ICSⱼ' et l'utilisateur titulaire Ut' a activé l'option de transfert d'appel sur la messagerie BMⱼ' qui est proposée par la plateforme de gestion de communication DGC' en liaison avec le fournisseur de service qui administre le site Internet dédié au dépôt de l'annonce.

Egalement au cours de cette étape préalable, l'utilisateur déposant Ud' a pris connaissance de l'identifiant de contact secondaire ICSⱼ', soit parce que l'utilisateur titulaire Ut' lui a communiqué préalablement, soit parce que l'utilisateur déposant Ud' est intéressé par l'annonce déposée par l'utilisateur titulaire Ut' sur le site Internet du fournisseur de service et a noté l'identifiant de contact secondaire ICSⱼ' associé à cette annonce.

L'identifiant de contact secondaire ICSⱼ' communiqué à l'utilisateur déposant Ud' peut être le numéro téléphonique NTⱼ', l'adresse email @EMⱼ' et/ou l'url URLⱼ' que l'utilisateur déposant Ud' sélectionne en fonction des capacités de communication du terminal de communication Td' qui est en sa possession au moment du déclenchement, via son réseau de communication de rattachement RCd', d'une communication à destination du terminal titulaire Tt'.

En S100', la communication déclenchée par le terminal déposant Td' est reçue par le centre de commutation CMT', via l'une des interfaces de communication COM10', COM11', COM12' de la plateforme DGC', selon le type de communication déclenchée par le terminal déposant Td'.

Le centre de commutation CMT', ayant la connaissance de l'identifiant de contact secondaire ICSⱼ' associé à l'identifiant de contact principal ICPₜ' du terminal titulaire Tt', identifie alors cette communication comme une première branche de la communication susceptible d'être établie entre le terminal déposant Td' et le terminal titulaire Tt'.

En S101', le centre de commutation CMT' envoie au gestionnaire de profils GP' une requête en fourniture de l'identifiant de contact principal ICPₜ' du terminal titulaire Tt' enregistré préalablement en correspondance avec l'identifiant de contact secondaire ICSⱼ', dans le module de stockage MST1' de la plateforme DGC'.

En S102', en réponse à la requête, le gestionnaire de profils GP' envoie au centre de commutation CMT' un message contenant l'identifiant de contact principal ICPₜ' du terminal Tt'.

Les échanges entre le centre de commutation CMT' et le gestionnaire de profils GP' sont par exemple conformes au protocole SIP.

A réception de ce message, en S103', le centre de commutation CMT' initie une communication à destination de l'identifiant de contact principal ICPₜ' du terminal Tt' à partir de l'identifiant de contact principal du terminal déposant Td'. Le centre de commutation CMT' identifie alors cette communication comme une deuxième branche de la communication à établir entre le terminal Td' et le terminal Tt'.

Le terminal Tt' ne répondant pas à la communication initiée en S103', par exemple soit parce que l'utilisateur titulaire Ut' ne souhaite pas décrocher, soit parce qu'il est déjà en ligne, soit parce que son terminal Tt' n'est pas joignable, la communication sur l'identifiant de contact secondaire ICSⱼ' est routée en S104' à destination du dispositif de gestion de boîtes de messagerie DGBM', via le réseau de communication RC1', au moyen d'une des interfaces de communication COM10', COM11', COM12', selon le type de communication qui a été déclenchée par le terminal déposant Td'.

En S105', le dispositif de gestion de boîtes de messagerie DGBM' reçoit la communication routée sur l'une de ses interfaces de communication COM20', COM21' ou COM22', selon le type de communication initiée par le terminal déposant Td'.

Si, par exemple, l'utilisateur déposant déclenche un appel vocal à partir de son terminal Td', sur le numéro téléphonique NTⱼ', la communication est reçue sur l'interface de communication COM21'.

Si, par exemple, l'utilisateur déposant Ud' déclenche un appel SMS à partir de son terminal Td', sur le numéro téléphonique NTⱼ', la communication est reçue sur l'interface de communication COM22'.

Si, par exemple, l'utilisateur déposant Ud' envoie un email à partir de son terminal Td', à l'adresse @EMⱼ', cette communication est reçue sur l'interface de communication COM20'.

Si, par exemple, l'utilisateur déposant Ud' clique sur l'url URLⱼ' mentionnée dans l'annonce déposée par l'utilisateur titulaire Ut', cette communication est également reçue sur l'interface de communication COM20'.

En S106', la communication reçue est routée à destination de la boîte de messagerie BMⱼ', en utilisant l'identifiant de boîte de messagerie IDMⱼ' enregistré dans le module de stockage MST2', en correspondance avec l'identifiant de contact secondaire ICSⱼ' de l'utilisateur titulaire Ut'.

En S107', suite au déclenchement du message d'accueil qui, selon le type du message à déposer, peut être visuel ou vocal, le dépôt de message par le terminal déposant Td' est reçu dans la boîte de messagerie BMⱼ'.

En fonction des capacités de communication du terminal déposant, le message peut contenir par exemple des données audio, textuelles, des images, de la vidéo, des données multimédia, etc...

De façon connue en soi, le message déposé est associé à des informations d'identification de l'utilisateur déposant Ud', tel que son nom, son numéro de téléphone, son adresse email, un pseudonyme, etc...

En S108', le dispositif de gestion de boîtes de messagerie DGBM' transmet sur l'interface COM30' du serveur NOT' de notification de dépôt de message, au moyen de son interface de communication COM20', via le réseau de communication RC1', un message indiquant qu'un message a été déposé en S107' en association avec l'identifiant de contact principal ICPₜ' de l'utilisateur Ut' et le type de notification de message sélectionné préalablement par l'utilisateur Ut' lors de la configuration de sa boîte de messagerie.

En S109', le serveur de notification de dépôt de message NOT' envoie alors directement sur l'identifiant de contact principal ICPₜ' de l'utilisateur Ut' un message contenant la notification de dépôt dudit message.

En fonction du type de notification de message sélectionné préalablement par l'utilisateur Ut' lors de la configuration de sa boîte de messagerie, et à titre d'exemples non limitatifs :
- la notification est un SMS ou un appel vocal avec tonalité particulière au décroché qui est reçu sur un numéro de téléphonie fixe ou mobile constituant l'identifiant de contact principal ICPₜ' du terminal Tt', ledit SMS ou ledit appel pouvant contenir directement le message déposé par l'utilisateur déposant Ud' ou bien contenir un menu vocal pour consulter le message déposé par l'utilisateur déposant,
- la notification est un email reçu à l'adresse email constituant l'identifiant de contact principal ICPₜ' du terminal Tt', ledit email pouvant contenir directement le message déposé par l'utilisateur déposant Ud' ou bien contenir un lien url d'accès au message dans la boîte de messagerie BMⱼ',
- la notification est une notification de type push, USSD ou encore de type url, reçue su l'adresse IP constituant l'identifiant de contact principal ICPₜ' du terminal Tt', la notification de type push ou USSD pouvant contenir directement le message déposé par l'utilisateur déposant Ud' ou bien contenir un lien url d'accès au message dans la boîte de messagerie BMⱼ', et la notification de type url donnant accès directement au message dans la boîte de messagerie BMⱼ'.

Conformément au procédé d'allocation de boîte de messagerie et au procédé de traitement de dépôt de message décrits ci-dessus, les communications entre le terminal de communication Tt', le dispositif de gestion de boîtes de messagerie DGBM' et le serveur de notification NOT' peuvent être sécurisées par des mécanismes d'authentification et de chiffrement bien connus.

La boîte de messagerie BMⱼ' peut par ailleurs être supprimée après une durée prédéterminée enregistrée dans le dispositif de gestion de boîtes de messagerie DGBM' ou sur requête de l'utilisateur Ut' auprès du dispositif de gestion de boîtes de messagerie, via la plateforme de gestion de communication DGC', ladite requête contenant l'identifiant IDMⱼ' de boîte de messagerie.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé d'allocation, à un utilisateur (Ut ; Ut'), d'une boîte de messagerie (BMⱼ ; BMⱼ') située dans un réseau de communication, qui met en œuvre, au niveau d'un dispositif de gestion de boîtes de messagerie, ce qui suit :
- réception (S1 ; S1') en provenance d'un terminal de communication, via le réseau de communication, d'une requête de demande de boîte de messagerie, ladite requête comprenant une information d'identification de l'utilisateur, ladite information d'identification étant différente d'un identifiant de contact de l'utilisateur, joignable sur un réseau de communication d'un opérateur de télécommunications auprès duquel est abonné l'utilisateur, ladite information d'identification de l'utilisateur contenue dans la requête étant un identifiant (IDP') d'un fournisseur de service détenteur dudit terminal de communication et un identifiant (IDUₜ') de l'utilisateur, l'utilisateur étant un usager du fournisseur de service,
- enregistrement (S2 ; S2') de ladite information d'identification reçue en association avec un identifiant (IDMⱼ ; IDMⱼ') de boîte de messagerie,
- envoi (S3 ; S3') d'un message de réponse à la requête, via le réseau de communication, au terminal de communication, ledit message comprenant l'identifiant de boîte de messagerie.

2. Procédé selon la revendication 1, dans lequel la requête est de type http.

3. Procédé selon la revendication 1, dans lequel l'utilisateur, qui est d'une part un usager du fournisseur de service détenteur dudit terminal de communication et, d'autre part, qui a un identifiant de contact principal et un identifiant de contact secondaire qui ont été préalablement enregistrés en correspondance dans ledit terminal de communication, l'identifiant de contact principal étant joignable sur un réseau de communication d'un opérateur de télécommunications auprès duquel est abonné l'utilisateur.

4. Procédé selon l'une quelconque des revendications 1 à 3, comprenant :
- la réception (S4 ; S4') en provenance du terminal de communication, via le réseau de communication, d'une requête en configuration d'un profil de la boîte de messagerie associée audit identifiant de boîte de messagerie, la requête comprenant l'identifiant de la boîte de messagerie,
- l'envoi (S5 ; S5') en retour au terminal de communication, via le réseau de communication, d'une réponse contenant un formulaire de configuration de profil de boîte de messagerie à compléter par l'utilisateur,
- la réception (S6 ; S7'-S8') en retour, en provenance du terminal de communication, via le réseau de communication, d'une réponse contenant le formulaire de configuration de profil de boîte de messagerie complété, ledit formulaire contenant un identifiant de contact principal de l'utilisateur,
- le paramétrage (S7 ; S9') de la boîte de messagerie à l'aide d'informations contenues dans le formulaire et dudit identifiant de contact principal de l'utilisateur.

5. Procédé selon l'une quelconque des revendications 1 à 4, comprenant en outre une phase de traitement de dépôt de message par un utilisateur, dit *utilisateur déposant*, sur la boîte de messagerie qui a été préalablement allouée à un utilisateur, dit *utilisateur titulaire,*
ledit procédé étant **caractérisé en ce que** l'utilisateur titulaire ayant préalablement fourni à l'utilisateur déposant un identifiant de contact secondaire (ICSⱼ ; ICSⱼ') préalablement enregistré, dans un dispositif de gestion de boîtes de messagerie, en association avec un identifiant (IDMⱼ ; IDMⱼ') de boîte de messagerie allouée à l'utilisateur titulaire, ledit identifiant de contact secondaire étant différent de tout identifiant de contact joignable sur un réseau de communication d'un opérateur de télécommunications auprès duquel est abonné l'utilisateur titulaire, il met en œuvre, au niveau du dispositif de gestion de boîtes de messagerie, ce qui suit :
- interception (S100 ; S105') d'une communication déclenchée par un terminal de communication de l'utilisateur déposant, dit *terminal déposant,* à destination dudit identifiant de contact secondaire,
- routage (S101 ; S106') de la communication à destination de la boîte de messagerie, en utilisant l'identifiant de la boîte de messagerie correspondant à l'identifiant de contact secondaire de l'utilisateur titulaire,
- réception (S102 ; S107') du dépôt de message par le terminal déposant dans la boîte de messagerie correspondant à l'identifiant de boîte de messagerie allouée à l'utilisateur titulaire,
- envoi (S104 ; S109') d'une notification de dépôt dudit message sur un identifiant de contact principal de l'utilisateur titulaire qui a été préalablement enregistré dans le dispositif de gestion de boîtes de messagerie, en association avec l'identifiant de contact secondaire et l'identifiant de boîte de messagerie allouée à l'utilisateur titulaire, ledit identifiant de contact principal étant joignable sur un réseau de communication d'un opérateur de télécommunications auprès duquel est abonné l'utilisateur titulaire.

6. Dispositif de gestion de boîtes de messagerie, comprenant un circuit de traitement (CT2 ; CT2') qui est agencé pour allouer, à un utilisateur, une boîte de messagerie située dans un réseau de communication, le dispositif étant tel que le circuit de traitement est agencé en outre pour :
- recevoir, en provenance d'un terminal de communication, via le réseau de communication, une requête de demande de boîte de messagerie, ladite requête comprenant une information d'identification de l'utilisateur, ladite information d'identification étant différente d'un identifiant de contact de l'utilisateur, joignable sur un réseau de communication d'un opérateur de télécommunications auprès duquel est abonné l'utilisateur, ladite information d'identification de l'utilisateur contenue dans la requête étant un identifiant (IDP') d'un fournisseur de service détenteur dudit terminal de communication et un identifiant (IDUₜ') de l'utilisateur, l'utilisateur étant un usager du fournisseur de service,
- enregistrer ladite information d'identification reçue en association avec un identifiant de boîte de messagerie,
- envoyer un message de réponse à la requête, via le réseau de communication, au terminal de communication, ledit message comprenant l'identifiant de boîte de messagerie.

7. Dispositif selon la revendication 6, dans lequel le circuit de traitement est en outre agencé pour traiter le dépôt d'un message par un utilisateur, dit *utilisateur déposant*, sur une boîte de messagerie qui a été préalablement allouée à un utilisateur, dit *utilisateur titulaire,* l'utilisateur titulaire ayant préalablement fourni à l'utilisateur déposant un identifiant de contact secondaire préalablement enregistré, dans le dispositif de gestion de boîtes de messagerie, en association avec un identifiant de boîte de messagerie allouée à l'utilisateur titulaire, ledit identifiant de contact secondaire étant différent de tout identifiant de contact joignable sur un réseau de communication d'un opérateur de télécommunications auprès duquel est abonné l'utilisateur titulaire, ledit circuit de traitement étant en outre agencé pour :
- intercepter une communication déclenchée par un terminal de communication de l'utilisateur déposant, dit *terminal déposant,* à destination dudit identifiant de contact secondaire,
- router la communication à destination de la boîte de messagerie, en utilisant l'identifiant de la boîte de messagerie correspondant à l'identifiant de contact secondaire de l'utilisateur titulaire,
- recevoir le dépôt de message par le terminal déposant dans la boîte de messagerie correspondant à l'identifiant de boîte de messagerie allouée à l'utilisateur titulaire,
- envoyer une notification de dépôt dudit message sur un identifiant de contact principal de l'utilisateur titulaire qui a été préalablement enregistré dans le dispositif de gestion de boîtes de messagerie, en association avec l'identifiant de contact secondaire et l'identifiant de boîte de messagerie allouée à l'utilisateur titulaire, ledit identifiant de contact principal étant joignable sur un réseau de communication d'un opérateur de télécommunications auprès duquel est abonné l'utilisateur titulaire.

8. Programme d'ordinateur comportant des instructions de code de programme pour l'exécution des étapes du procédé d'allocation de boîte de messagerie selon l'une quelconque des revendications 1 à 4 ou pour l'exécution des étapes du procédé de traitement de dépôt de message selon la revendication 5, lorsque ledit programme est exécuté sur un dispositif de gestion de boîtes de messagerie.

9. Support d'enregistrement lisible par un ordinateur sur lequel est enregistré un programme d'ordinateur comprenant des instructions de code de programme pour l'exécution des étapes du procédé d'allocation de boîte de messagerie selon l'une quelconque des revendications 1 à 4 ou pour l'exécution des étapes du procédé de traitement de dépôt de message selon la revendication 5, lorsque ledit programme est exécuté sur un dispositif de gestion de boîtes de messagerie.

## Patentansprüche

1. Verfahren zum Zuordnen eines Postfachs (BMⱼ; BMⱼ'), das sich in einem Kommunikationsnetz befindet, zu einem Benutzer (Ut; Ut'),
wobei das Verfahren bezüglich einer Vorrichtung zum Verwalten von Postfächern Folgendes aufweist:
- Empfangen (S1; S1') einer Postfachanforderungsanfrage von einem Kommunikationsendgerät über das Kommunikationsnetz, wobei die Anfrage Informationen zur Identifizierung des Benutzers aufweist, wobei die Identifizierungsinformationen sich von einer Kontaktkennung des Benutzers unterscheiden, die in einem Kommunikationsnetz eines Telekommunikationsbetreibers erreichbar ist, bei dem der Benutzer abonniert ist, wobei die in der Anfrage enthaltenen Informationen zur Identifizierung des Benutzers eine Kennung (IDP') eines Dienstleisters sind, welcher der Besitzer des Kommunikationsendgeräts ist, und eine Kennung (IDUₜ') des Benutzers, wobei der Benutzer ein Nutzer des Dienstleisters ist,
- Aufzeichnen (S2; S2') der im Zusammenhang mit einer Postfachkennung (IDMⱼ; IDMⱼ') empfangenen Identifizierungsinformationen,
- Senden (S3; S3') einer Antwortnachricht auf die Anfrage über das Kommunikationsnetz an das Kommunikationsendgerät, wobei die Nachricht die Postfachkennung aufweist.

2. Verfahren nach Anspruch 1, wobei die Anfrage vom Typ http ist.

3. Verfahren nach Anspruch 1, wobei der Benutzer einerseits ein Nutzer des Dienstleisters ist, welcher der Besitzer des Kommunikationsendgeräts ist, und andererseits eine Hauptkontaktkennung und eine Sekundärkontaktkennung hat, die zuvor in Übereinstimmung in dem Kommunikationsendgerät gespeichert wurden, wobei die Hauptkontaktkennung in einem Kommunikationsnetz eines Telekommunikationsbetreibers erreichbar ist, bei dem der Benutzer abonniert ist, und die Sekundärkontaktkennung sich von allen Kontaktkennungen unterscheidet, die in einem Kommunikationsnetz eines Telekommunikationsbetreibers erreichbar sind, bei dem der Benutzer abonniert ist.

4. Verfahren nach einem der Ansprüche 1 bis 3, das Folgendes aufweist:
- Empfangen (S4; S4') einer Konfigurationsanfrage für ein Profil des Postfachs, das der Postfachkennung zugeordnet ist, von dem Kommunikationsendgerät über das Kommunikationsnetz, wobei die Anfrage die Postfachkennung aufweist,
- Zurücksenden (S5; S5') einer Antwort an das Kommunikationsendgerät über das Kommunikationsnetz, die ein vom Benutzer auszufüllendes Formular zur Konfiguration des Profils des Postfachs enthält,
- Empfangen (S6; S7'-S8') einer Antwort von dem Kommunikationsendgerät über das Kommunikationsnetz, die ein ausgefülltes Formular zur Konfiguration des Profils des Postfachs enthält, wobei das Formular eine Hauptkontaktkennung des Benutzers enthält,
- Parametrieren (S7; S9') des Postfachs mithilfe der Informationen, die in dem Formular und der Hauptkontaktkennung des Benutzers enthalten sind.

5. Verfahren nach einem der Ansprüche 1 bis 4, das darüber hinaus eine Phase zum Verarbeiten der Nachrichtenablage durch einen Benutzer, genannt "hinterlegender Benutzer", in dem Postfach, das vorher einem Benutzer, genannt "Inhaberbenutzer", zugewiesen wurde, aufweist,
wobei das Verfahren **dadurch gekennzeichnet ist, dass** der Inhaberbenutzer dem hinterlegenden Benutzer vorher eine Sekundärkontaktkennung (ICSⱼ; ICSⱼ'), die vorher in einer Vorrichtung zum Verwalten von Postfächern gespeichert wurde, geliefert hat, zusammen mit einer Postfachkennung (IDMⱼ; IDMⱼ'), die dem Inhaberbenutzer zugewiesen ist, wobei sich die Sekundärkontaktkennung von allen Kontaktkennungen unterscheidet, die in einem Kommunikationsnetz eines Telekommunikationsbetreibers erreichbar sind, bei dem der Inhaberbenutzer abonniert ist, wobei das Verfahren bezüglich der Vorrichtung zum Verwalten von Postfächern Folgendes aufweist:
- Abfangen (S100; S105') einer durch ein Kommunikationsendgerät des hinterlegenden Benutzers, genannt "hinterlegendes Endgerät", ausgelösten Kommunikation in Richtung der Sekundärkontaktkennung,
- Routen (S101; S106') der Kommunikation in Richtung des Postfachs unter Verwendung der Postfachkennung, die der Sekundärkontaktkennung des Inhaberbenutzers entspricht,
- Empfangen (S102; S107') der Nachrichtenablage durch das hinterlegende Endgerät in dem Postfach, das der dem Inhaberbenutzer zugeordneten Postfachkennung entspricht,
- Senden (S104; S109') einer Benachrichtigung über die Hinterlegung dieser Nachricht auf einer Hauptkontaktkennung des Inhaberbenutzers, die vorher in der Vorrichtung zum Verwalten von Postfächern gespeichert wurde, zusammen mit der Sekundärkontaktkennung und der Postfachkennung, die dem Inhaberbenutzer zugeordnet ist, wobei die Hauptkontaktkennung in einem Kommunikationsnetz eines Telekommunikationsbetreibers erreichbar ist, bei dem der Inhaberbenutzer abonniert ist.

6. Vorrichtung zum Verwalten von Postfächern, die eine Verarbeitungsschaltung (CT2; CT2') aufweist, die ausgebildet ist, einem Benutzer ein Postfach zuzuordnen, das sich in einem Kommunikationsnetz befindet, wobei die Vorrichtung **dadurch gekennzeichnet ist, dass** die Verarbeitungsschaltung darüber hinaus ausgebildet ist zum:
- Empfangen einer Postfachanforderungsanfrage von einem Kommunikationsendgerät über das Kommunikationsnetz, wobei die Anfrage Informationen zur Identifizierung des Benutzers aufweist, wobei die Identifizierungsinformationen sich von einer Kontaktkennung des Benutzers unterscheiden, die in einem Kommunikationsnetz eines Telekommunikationsbetreibers erreichbar ist, bei dem der Benutzer abonniert ist, wobei die in der Anfrage enthaltenen Informationen zur Identifizierung des Benutzers eine Kennung (IDP') eines Dienstleisters sind, welcher der Besitzer des Kommunikationsendgeräts ist, und eine Kennung (IDUₜ') des Benutzers, wobei der Benutzer ein Nutzer des Dienstleisters ist,
- Aufzeichnen der im Zusammenhang mit einer Postfachkennung empfangenen Identifizierungsinformationen,
- Senden einer Antwortnachricht auf die Anfrage über das Kommunikationsnetz an das Kommunikationsendgerät, wobei die Nachricht die Postfachkennung aufweist.

7. Vorrichtung nach Anspruch 6, wobei die Verarbeitungsschaltung darüber hinaus ausgebildet ist zum Verarbeiten der Nachrichtenablage durch einen Benutzer, genannt "hinterlegender Benutzer", in einem Postfach, das vorher einem Benutzer, genannt "Inhaberbenutzer", zugewiesen wurde, wobei der Inhaberbenutzer dem "hinterlegenden Benutzer" vorher eine Sekundärkontaktkennung, die vorher in einer Vorrichtung zum Verwalten von Postfächern gespeichert wurde, geliefert hat, zusammen mit einer Postfachkennung, die dem Inhaberbenutzer zugewiesen ist, wobei sich die Sekundärkontaktkennung von allen Kontaktkennungen unterscheidet, die in einem Kommunikationsnetz eines Telekommunikationsbetreibers erreichbar sind, bei dem der Inhaberbenutzer abonniert ist, wobei das Verfahren bezüglich der Vorrichtung zum Verwalten von Postfächern Folgendes aufweist:
- Abfangen einer durch ein Kommunikationsendgerät des hinterlegenden Benutzers, genannt "hinterlegendes Endgerät", ausgelösten Kommunikation in Richtung der Sekundärkontaktkennung,
- Routen der Kommunikation in Richtung des Postfachs unter Verwendung der Postfachkennung, die der Sekundärkontaktkennung des Inhaberbenutzers entspricht,
- Empfangen der Nachrichtenablage durch das hinterlegende Endgerät in dem Postfach, das der dem Inhaberbenutzer zugeordneten Postfachkennung entspricht,
- Senden einer Benachrichtigung über die Hinterlegung dieser Nachricht auf einer Hauptkontaktkennung des Inhaberbenutzers, die vorher in der Vorrichtung zum Verwalten von Postfächern gespeichert wurde, zusammen mit der Sekundärkontaktkennung und der Postfachkennung, die dem Inhaberbenutzer zugeordnet ist, wobei die Hauptkontaktkennung in einem Kommunikationsnetz eines Telekommunikationsbetreibers erreichbar ist, bei dem der Inhaberbenutzer abonniert ist.

8. Computerprogramm, das Programmcodeanweisungen zum Ausführen der Schritte des Verfahrens zum Zuordnen eines Postfachs nach einem der Ansprüche 1 bis 4 oder zum Ausführen der Schritte des Verfahrens zum Verarbeiten einer Nachrichtenablage nach Anspruch 5 aufweist, wenn das Programm auf einer Vorrichtung zum Verwalten von Postfächern ausgeführt wird.

9. Speichermedium, das von einem Computer gelesen werden kann, auf dem ein Computerprogramm gespeichert ist, das Programmcodeanweisungen zum Ausführen der Schritte des Verfahrens zum Zuordnen eines Postfachs nach einem der Ansprüche 1 bis 4 oder zum Ausführen der Schritte des Verfahrens zum Verarbeiten einer Nachrichtenablage nach Anspruch 5 aufweist, wenn das Programm auf einer Vorrichtung zum Verwalten von Postfächern ausgeführt wird.

## Claims

1. Method for allocating to a user (Ut; Ut') a mailbox (BMⱼ; BMⱼ') located in a communication network, which implements the following actions in a mailbox management device:
- receiving (S1; S1') from a communication terminal, via the communication network, a mailbox application request, said request comprising user identification information, said identification information differing from a contact identifier of the user that can be reached on a communication network of a telecommunications operator to which the user subscribes, said user identification information contained in the request being an identifier (IDP') of a service provider that owns said communication terminal and an identifier (IDUₜ') of the user, the user being a customer of the service provider,
- recording (S2; S2') said received identification information in association with a mailbox identifier (IDMⱼ; IDMⱼ'),
- sending (S3; S3') a response message in reply to the request, via the communication network, to the communication terminal, said message comprising the mailbox identifier.

2. Method according to Claim 1, wherein the request is of http type.

3. Method according to Claim 1, wherein the user, firstly, is a customer of the service provider that owns said communication terminal and, secondly, has a main contact identifier and a secondary contact identifier that have previously been recorded in connection with one another in said communication terminal, the main contact identifier being able to be reached on a communication network of a telecommunications operator to which the user subscribes, and the secondary contact identifier differing from any contact identifier that can be reached on a communication network of a telecommunications operator to which the user subscribes.

4. Method according to any one of Claims 1 to 3, comprising:
- receiving (S4; S4') from the communication terminal, via the communication network, a request for configuring a profile of the mailbox associated with said mailbox identifier, the request comprising the identifier of the mailbox,
- sending (S5; S5') in return to the communication terminal, via the communication network, a response containing a mailbox profile configuration form to be completed by the user,
- receiving (S6; S7'-S8') in return from the communication terminal, via the communication network, a response containing the completed mailbox profile configuration form, said form containing a main contact identifier of the user,
- parametrizing (S7; S9') the mailbox using information contained in the form and said main contact identifier of the user.

5. Method according to any one of Claims 1 to 4, further comprising a phase of processing the depositing of a message by a user, known as *depositing user*, in the mailbox that has previously been allocated to a user, known as *owner user*,
said method being **characterized in that**, the owner user having previously provided the depositing user with a secondary contact identifier (ICSⱼ; ICSⱼ') that has previously been recorded in a mailbox management device in association with an identifier (IDMⱼ; IDMⱼ') of the mailbox allocated to the owner user, said secondary contact identifier differing from any contact identifier that can be reached on a communication network of a telecommunications operator to which the owner user subscribes, it implements the following actions in the mailbox management device:
- intercepting (S100; S105') a communication triggered by a communication terminal of the depositing user, known as *depositing terminal*, and directed to said secondary contact identifier,
- routing (S101; S106') the communication to the mailbox, by using the identifier of the mailbox that corresponds to the secondary contact identifier of the owner user,
- receiving (S102; S107') the message deposited by the depositing terminal in the mailbox that corresponds to the identifier of the mailbox allocated to the owner user,
- sending (S104; S109') a notification that said message has been deposited to a main contact identifier of the owner user that has previously been recorded in the mailbox management device in association with the secondary contact identifier and the identifier of the mailbox allocated to the owner user, said main contact identifier being able to be reached on a communication network of a telecommunications operator to which the owner user subscribes.

6. Mailbox management device comprising a processing circuit (CT2; CT2'), which is designed to allocate to a user a mailbox located in a communication network, the device being such that the processing circuit is further designed to:
- receive from a communication terminal, via the communication network, a mailbox application request, said request comprising user identification information, said identification information differing from a contact identifier of the user that can be reached on a communication network of a telecommunications operator to which the user subscribes, said user identification information contained in the request being an identifier (IDP') of a service provider that owns said communication terminal and an identifier (IDUt') of the user, the user being a customer of the service provider,
- record said received identification information in association with a mailbox identifier,
- send a response message in reply to the request, via the communication network, to the communication terminal, said message comprising the mailbox identifier.

7. Device according to Claim 6, wherein the processing circuit is further designed to process the depositing of a message by a user, known as *depositing user*, in a mailbox that has previously been allocated to a user, known as *owner user*, the owner user having previously provided the depositing user with a secondary contact identifier that has previously been recorded in the mailbox management device in association with an identifier of the mailbox allocated to the owner user, said secondary contact identifier differing from any contact identifier that can be reached on a communication network of a telecommunications operator to which the owner user subscribes, said processing circuit further being designed to:
- intercept a communication triggered by a communication terminal of the depositing user, known as *depositing terminal*, and directed to said secondary contact identifier,
- route the communication to the mailbox, by using the identifier of the mailbox that corresponds to the secondary contact identifier of the owner user,
- receive the message deposited by the depositing terminal in the mailbox that corresponds to the identifier of the mailbox allocated to the owner user,
- send a notification that said message has been deposited to a main contact identifier of the owner user that has previously been recorded in the mailbox management device in association with the secondary contact identifier and the identifier of the mailbox allocated to the owner user, said main contact identifier being able to be reached on a communication network of a telecommunications operator to which the owner user subscribes.

8. Computer program including program code instructions for executing the steps of the mailbox allocation method according to any one of Claims 1 to 4 or for executing the steps of the method for processing the depositing of a message according to Claim 5 when said program is executed on a mailbox management device.

9. Computer-readable recording medium on which there is recoded a computer program comprising program code instructions for executing the steps of the mailbox allocation method according to any one of Claims 1 to 4 or for executing the steps of the method for processing the depositing of a message according to Claim 5 when said program is executed on a mailbox management device.
